# EUROPEAN PATENT APPLICATION

(11) **EP 4 679 921 A1**
(43) Date of publication of application: **14.01.2026**
(21) Application number: 24785262.7
(22) Date of filing: 04.04.2024
(51) Int. Cl.: H04W 72/232, H04W 72/12, H04W 72/04, H04W 72/0457, H04L 5/00, H04L 27/26

(54) **METHOD AND DEVICE FOR DESIGNING DOWNLINK CONTROL INFORMATION IN WIRELESS COMMUNICATION SYSTEM**

(30) Priority: 07.04.2023 KR 20230045934; 10.11.2023 KR 20230155906
(71) Applicant: Samsung Electronics Co., Ltd., Suwon-si, Gyeonggi-do 16677 (KR)
(72) Inventor: CHOI, Kyungjun, Suwon-si, Gyeonggi-do 16677 (KR); BAE, Taehan, Suwon-si, Gyeonggi-do 16677 (KR); JI, Hyoungju, Suwon-si, Gyeonggi-do 16677 (KR)
(74) Representative: Gulde & Partner
(86) International application number: PCT/KR2024/004418
(87) International publication number: WO 2024/210562

(57) **Abstract**

The present disclosure relates to a 5G or 6G communication system for supporting higher data transmission rates. Disclosed are a method and device for designing downlink control information when a terminal schedules multiple cells using one piece of downlink control information.

## Description

### [Technical Field]

The disclosure relates to the operations of a terminal and a base station in a wireless communication system. Specifically, the disclosure relates to a method and a device for designing downlink control information when the terminal schedules multiple cells using one piece of downlink control information.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-toeverything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

### [Disclosure]

### [Technical Problem]

Embodiments set forth herein are to provide a device and a method capable of effectively providing services in a mobile communication system. In particular, the disclosed embodiment provides a method and a device for effectively designing and transmitting and receiving multi-cell downlink control information (MC-DCI) for scheduling data transmission and reception of multiple cells.

### [Technical Solution]

According to the disclosure, a method performed by a terminal in a communication system includes receiving, from a base station, information on a cell set scheduled by downlink control information for a plurality of cells, and receiving, from the base station, the downlink control information for the plurality of cells, wherein the downlink control information includes resource allocation information for scheduling each physical downlink shared channel (PDSCH) on one or more cells included in the cell set, and wherein, in case that a first cell among the one or more cells is a deactivated cell, a length of the resource allocation information for the first cell is based on a downlink bandwidth part (BWP) that is first activated in case of activating the first cell.

In addition, a method performed by a base station in a communication includes transmitting, to a terminal, information on a cell set scheduled by downlink control information for a plurality of cells, and transmitting, to the terminal, the downlink control information for the plurality of cells, wherein the downlink control information includes resource allocation information for scheduling each physical downlink shared channel (PDSCH) on one or more cells included in the cell set, and wherein, in case that a first cell among the one or more cells is a deactivated cell, a length of the resource allocation information for the first cell is based on a downlink bandwidth part (BWP) that is first activated in case of activating the first cell.

A terminal in a communication system includes multiple transceivers, and a controller including multiple processors, wherein the controller is configured to receive, from a base station, information on a cell set scheduled by downlink control information for a plurality of cells, and receive, from the base station, the downlink control information for the plurality of cells, wherein the downlink control information includes resource allocation information for scheduling each physical downlink shared channel (PDSCH) on one or more cells included in the cell set, and wherein, in case that a first cell among the one or more cells is a deactivated cell, a length of the resource allocation information for the first cell is based on a downlink bandwidth part (BWP) that is first activated in case of activating the first cell.

A base station of a communication system includes multiple transceivers, and a controller including multiple processors, wherein the controller is configured to transmit, to a terminal, information on a cell set scheduled by downlink control information for a plurality of cells, and transmit, to the terminal, the downlink control information for the plurality of cells, wherein the downlink control information includes resource allocation information for scheduling each physical downlink shared channel (PDSCH) on one or more cells included in the cell set, and wherein, in case that a first cell among the one or more cells is a deactivated cell, a length of the resource allocation information for the first cell is based on a downlink bandwidth part (BWP) that is first activated in case of activating the first cell.

### [Advantageous Effects]

Embodiments set forth herein provide a device and a method capable of effectively providing services in a mobile communication system. In particular, the disclosed embodiment provides a method and a device for effectively performing transmission and reception of downlink control information for scheduling multiple cells.

### [Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.
FIG. 4 illustrates an example of a control resource set configuration of a downlink control channel in a wireless communication system; according to an embodiment of the disclosure.
FIG. 5 illustrates a structure of a downlink control channel in a wireless communication system according to an embodiment of the disclosure.
FIG. 6 illustrates an example of frequency domain resource allocation with regard to a PDSCH in a wireless communication system according to an embodiment of the disclosure.
FIG. 7 illustrates an example of time domain resource allocation with regard to a PDSCH in a wireless communication system according to an embodiment of the disclosure.
FIG. 8 illustrates an example of time domain resource allocation according to subcarrier spacings with regard to a data channel and a control channel in a wireless communication system according to an embodiment of the disclosure.
FIG. 9 illustrates an example of MC-DCI including multiple FDRA fields.
FIG. 10 illustrates an example of a method for determining cells scheduled based on multiple FDRA fields included in MC-DCI.
FIG. 11 illustrates an example in which one piece of DCI schedules a PDSCH for one cell, and the DCI indicates a BWP other than a currently active BWP.
FIG. 12 illustrates an example in which DCI for scheduling multiple PDSCHs indicates BWP switching.
FIG. 13 illustrates an example of a method for monitoring MC-DCI, with reference to a PDSCH that starts earliest in time.
FIG. 14 illustrates an example of a method for determining multiple PDSCHs as a reference PDSCH to monitor MC-DCI.
FIG. 15 illustrates an example of an operation of a UE according to the disclosure.
FIG. 16 illustrates an example of an operation of a base station according to the disclosure.
FIG. 17 illustrates a structure of a UE in a wireless communication system according to an embodiment of the disclosure.
FIG. 18 illustrates a structure of a base station in a wireless communication system according to an embodiment of the disclosure.

### [Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultramobile broadband (UMB), IEEE 802.16e, and the like, as well as typical voice-based services.

As a typical example of the broadband wireless communication system, an LTE system employs an orthogonal frequency division multiplexing (OFDM) scheme in a downlink and employs a single carrier frequency division multiple access (SC-FDMA) scheme in an uplink. The uplink refers to a radio link via which a user equipment (UE) (or MS) transmits data or control signals to a base station, and the downlink refers to a radio link via which the base station transmits data or control signals to the UE. The above multiple access scheme may separate data or control information of respective users by allocating and operating time-frequency resources for carrying the data or control information for each user so as to avoid overlapping therebetween, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultrareliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, the 5G system is not limited to the three services described above.

Hereinafter, a frame structure of a 5G system will be described in more detail with reference to the accompanying drawings.

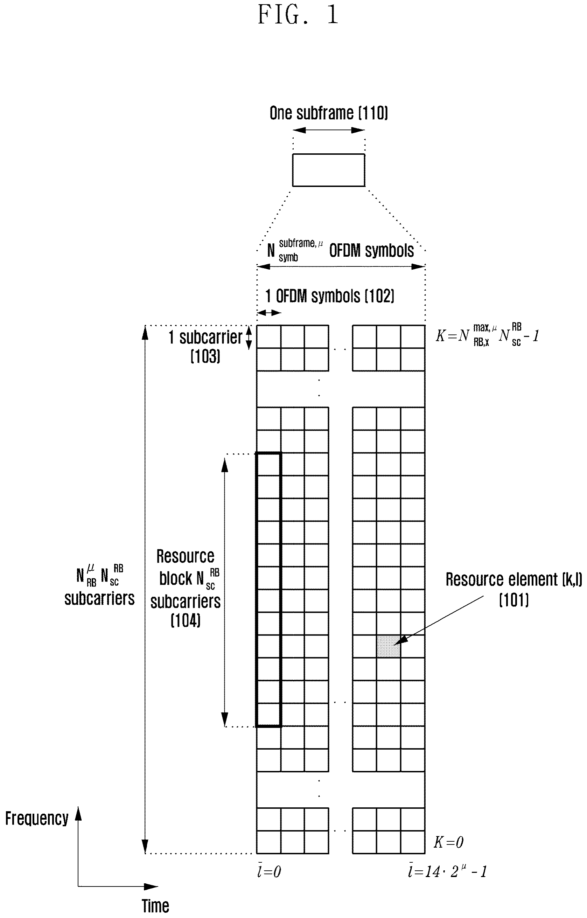

FIG. 1 illustrates a basic structure of a time-frequency domain, which is a radio resource domain used to transmit data or control channels, in a 5G system.

FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, ${N}_{SC}^{RB}$ (for example, 12) consecutive REs may constitute one resource block (RB) 104.

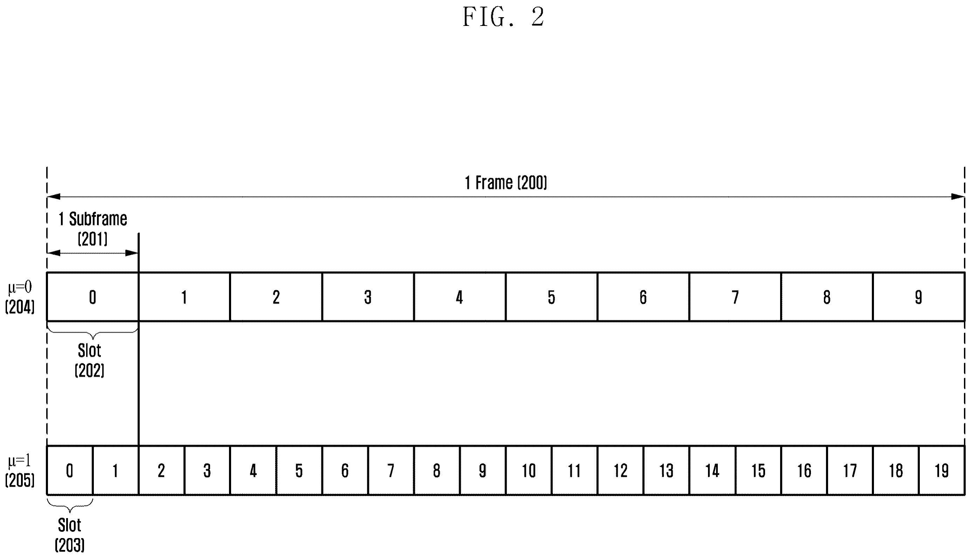

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot ${N}_{symb}^{slot} = 14$). One subframe 201 may include one or multiple slots 202 and 203, and the number of slots 202 and 203 per one subframe 201 may vary depending on configuration values µ for the subcarrier spacing 204 or 205. The example of FIG. 2 shows the case of µ=0 (2-04) and the case of µ=1 (2-05) as a configuration value for a subcarrier spacing. In the case of µ=0 (204), one subframe 201 may include one slot 202, and in the case of µ=1 (205), one subframe 201 may include two slots 203. That is, the number of slots per one subframe ${N}_{slot}^{subframe , μ}$ may differ depending on the subcarrier spacing configuration value µ, and the number of slots per one frame ${N}_{slot}^{frame , μ}$ may differ accordingly. ${N}_{slot}^{subframe , μ}$ and ${N}_{slot}^{frame , μ}$ may be defined according to each subcarrier spacing configuration µ as in Table 1 below.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

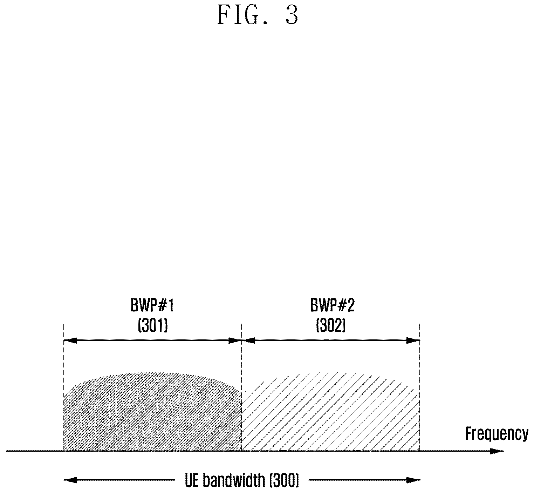

Next, a bandwidth part (BWP) configuration in a 5G communication system will be described in detail with reference to the accompanying drawings. FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

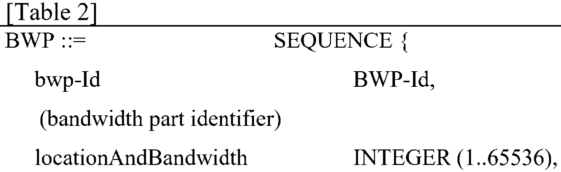

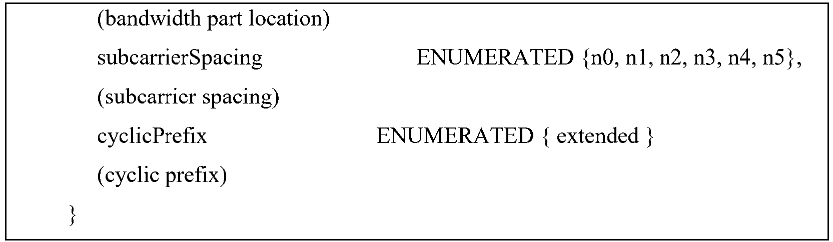

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI). According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by the 5G system may be used for various purposes.

According to an embodiment, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set configured for a downlink control channel which may be used to transmit DC) for scheduling an SIB from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

Hereinafter, a bandwidth part (BWP) change will be described.

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time (T_{BWP}) required during a bandwidth part change are specified in standards, and may be defined as given below, for example.

**[Table 3]**

| *µ* | NR Slot length (ms) | BWP switch delay T_{BWP} (slots) | |
|---|---|---|---|
| | | Type 1^{Note 1} | Type 2^{Note 1} |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station. If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+T_{BWP}, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time (T_{BWP}). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time (T_{BWP}).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

Next, synchronization signal (SS)/PBCH blocks in a 5G system will be described.

An SS/PBCH block may refer to a physical layer channel block including a primary synchronization signal (PSS), a secondary synchronization signal (SSS), and a PBCH. Details thereof are as follows.
- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and control resource set #0 may be configured for the UE from the MIB. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G communication system will be described in detail.

In a wireless communication system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

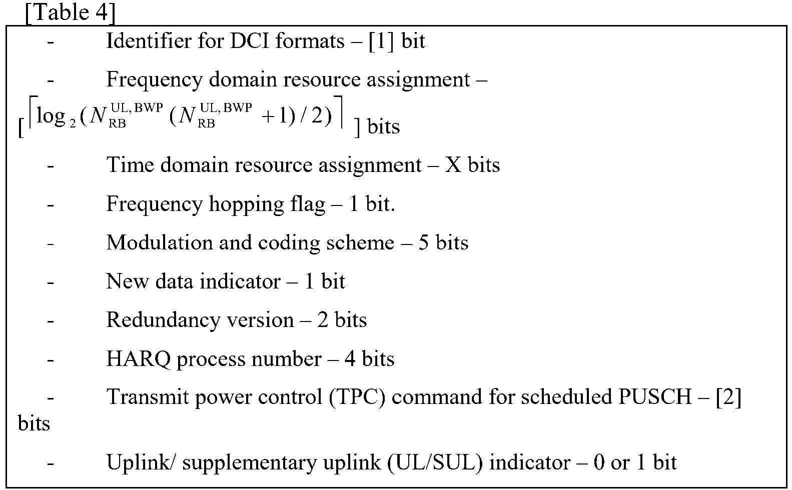

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

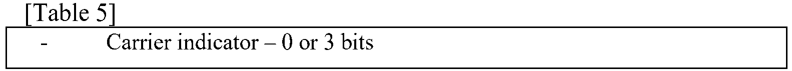

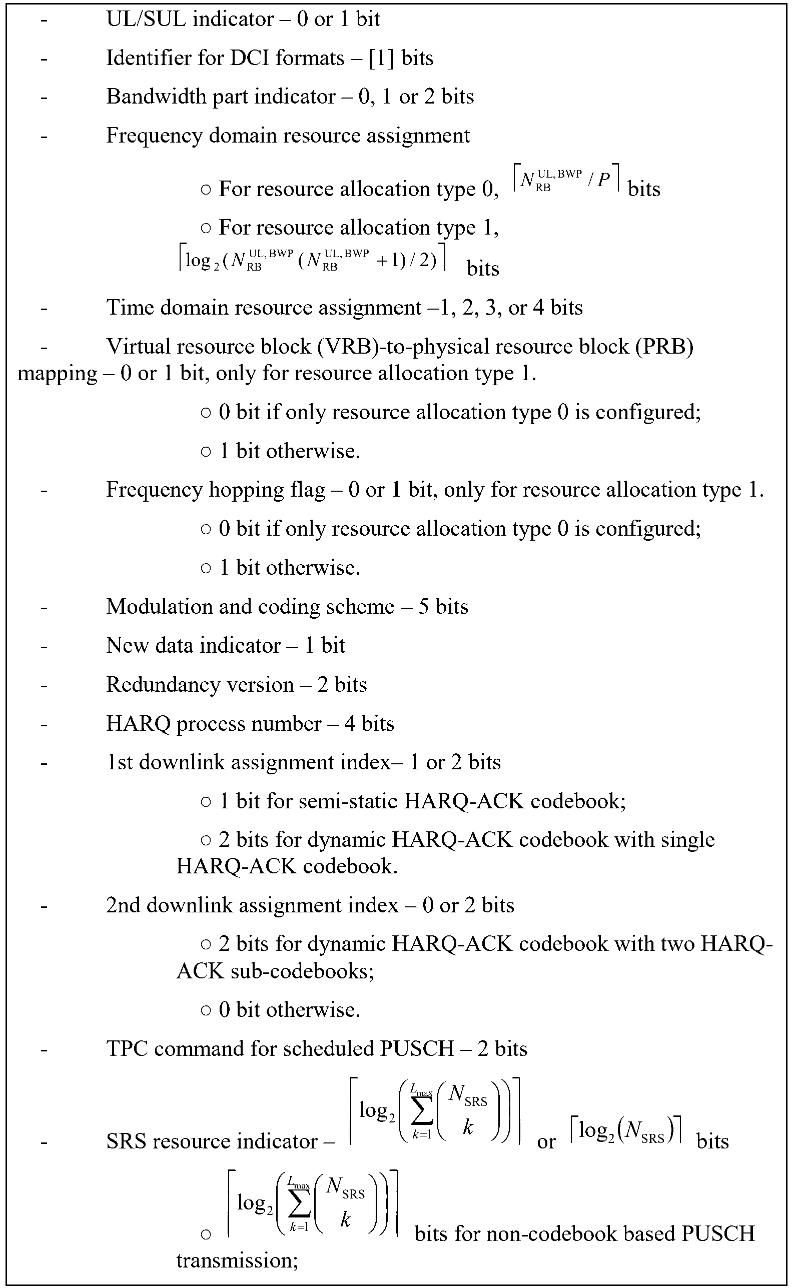

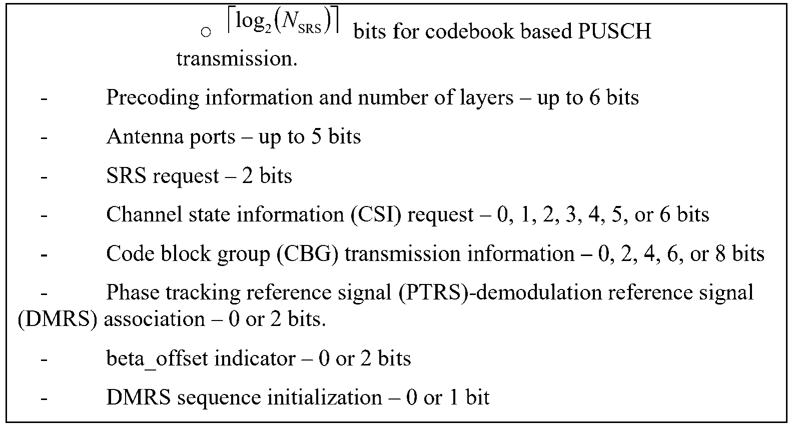

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

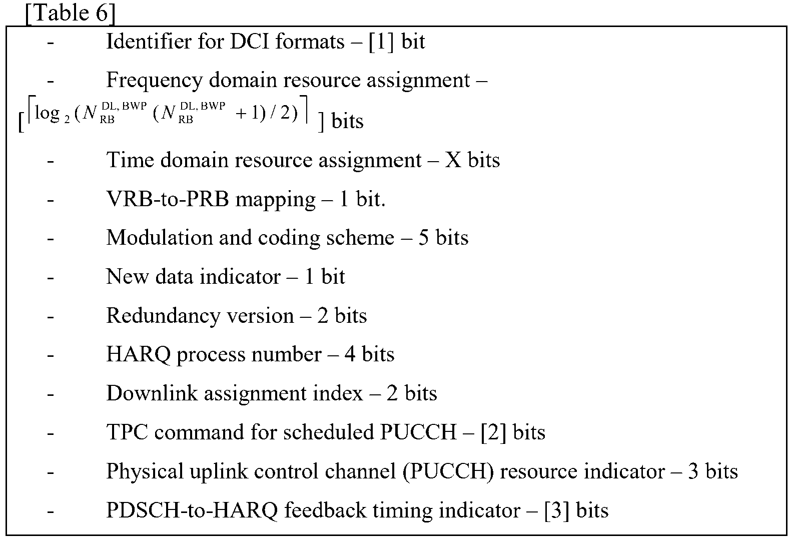

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

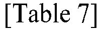

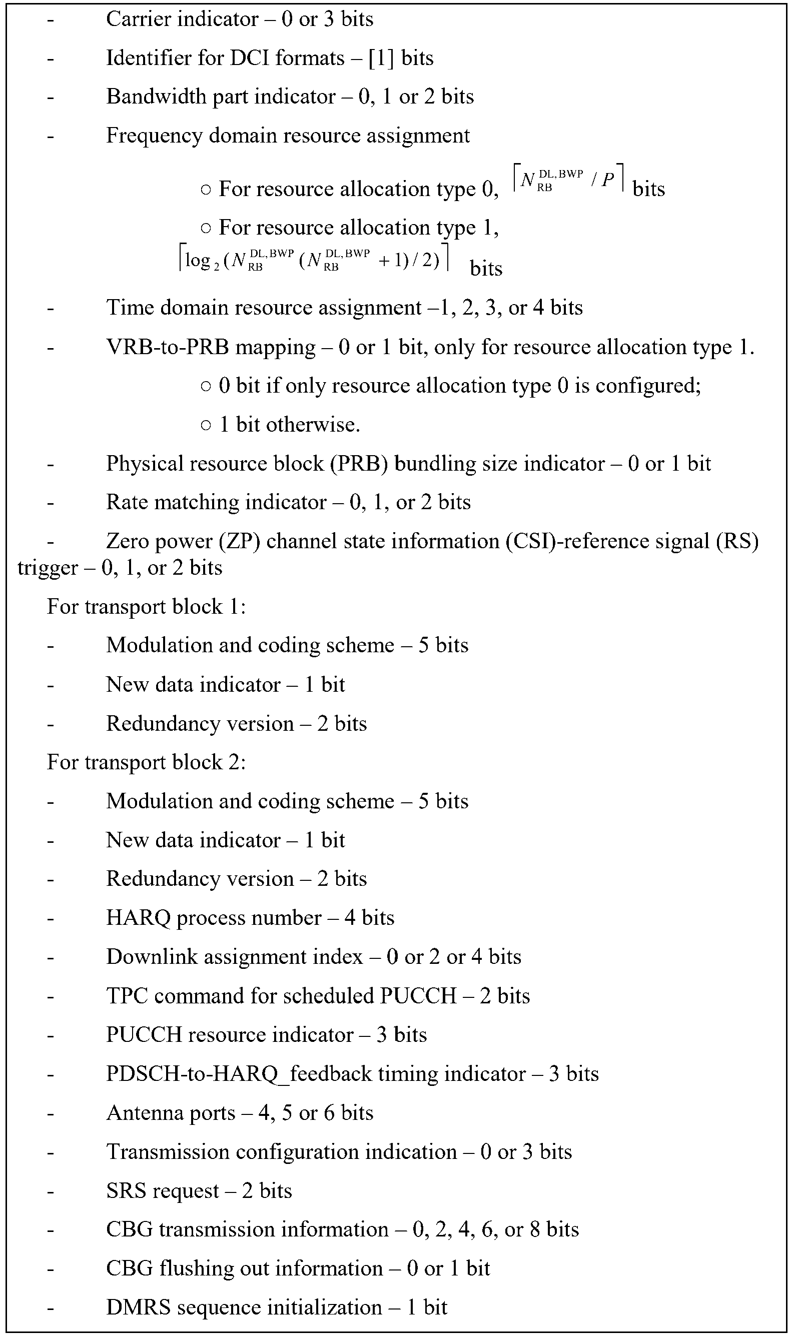

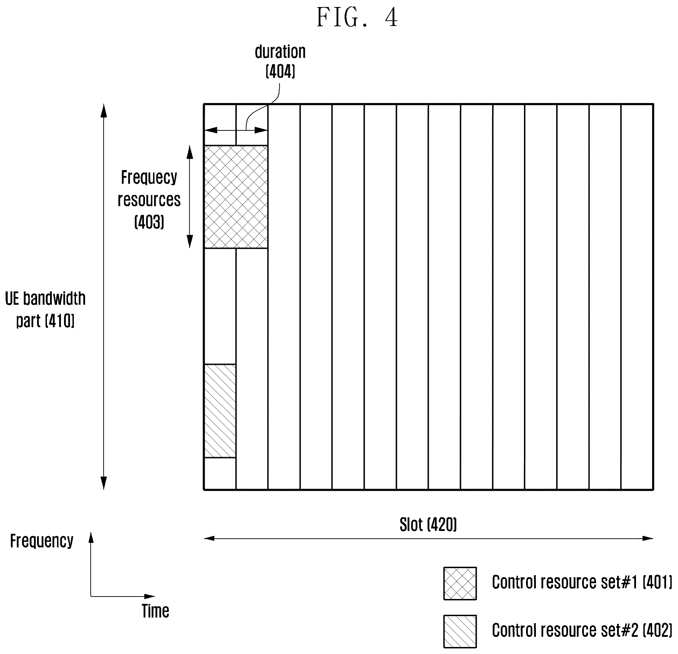

Hereinafter, a downlink control channel in a 5G communication system will be described in more detail with reference to the accompanying drawings. FIG. 4 illustrates an example of a control resource set used to transmit a downlink control channel in a 5G system. FIG. 4 illustrates an example in which a UE bandwidth part 410 is configured along the frequency axis, and two control resource sets (control resource set #1 401 and control resource set #2 402) are configured within one slot 420 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through higher layer signaling (for example, system information, MIB, RRC signaling, etc.). The description that a control resource set is configured for a UE means that information such as a control resource set identity, the control resource set's frequency location, and the control resource set's symbol duration is provided. For example, the control resource set may include the following pieces of information: given in Table 8 below.

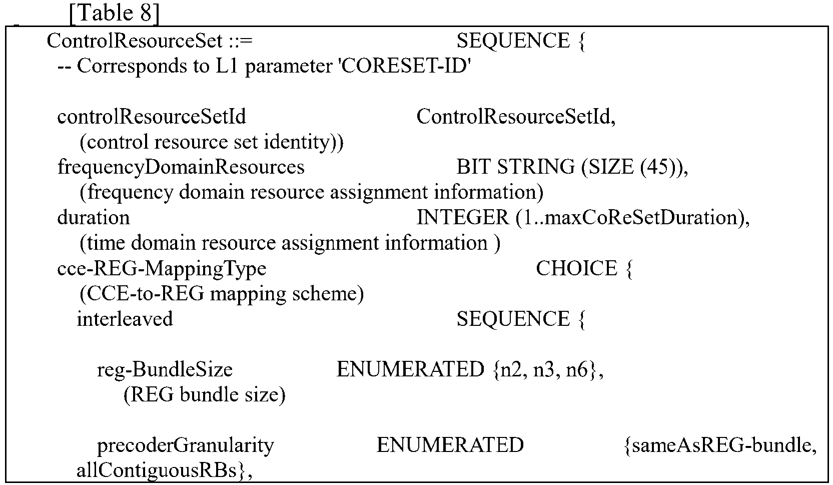

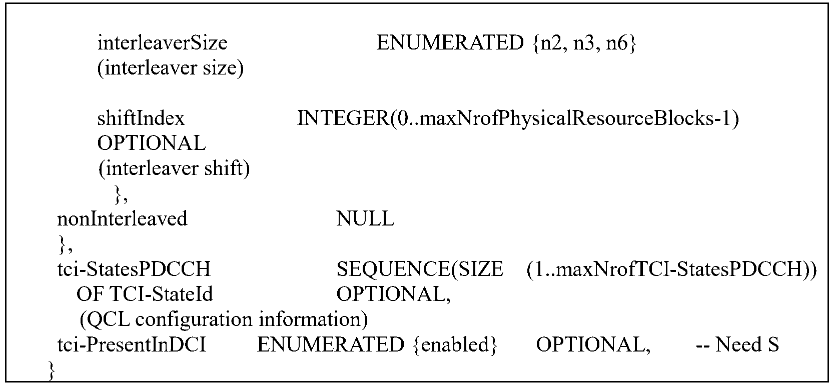

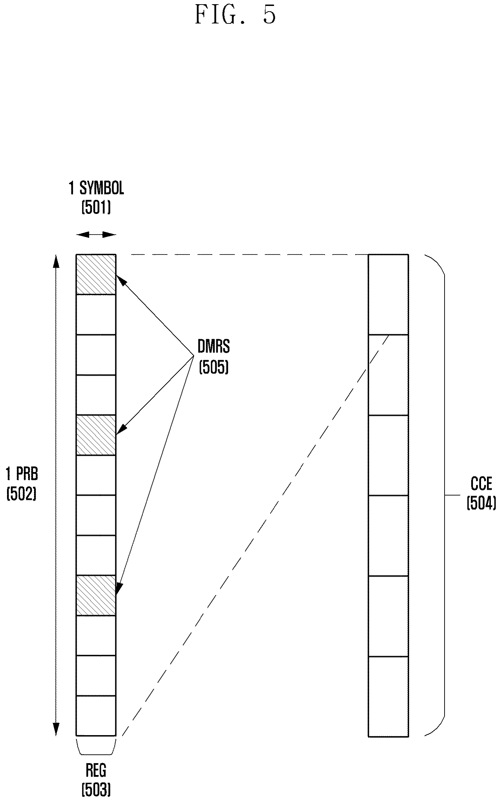

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding control resource set. FIG. 5 illustrates an example of a basic unit of time and frequency resources constituting a downlink control channel available in a 5G system. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 9 below.

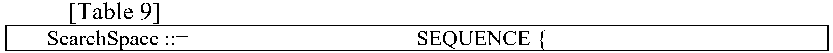

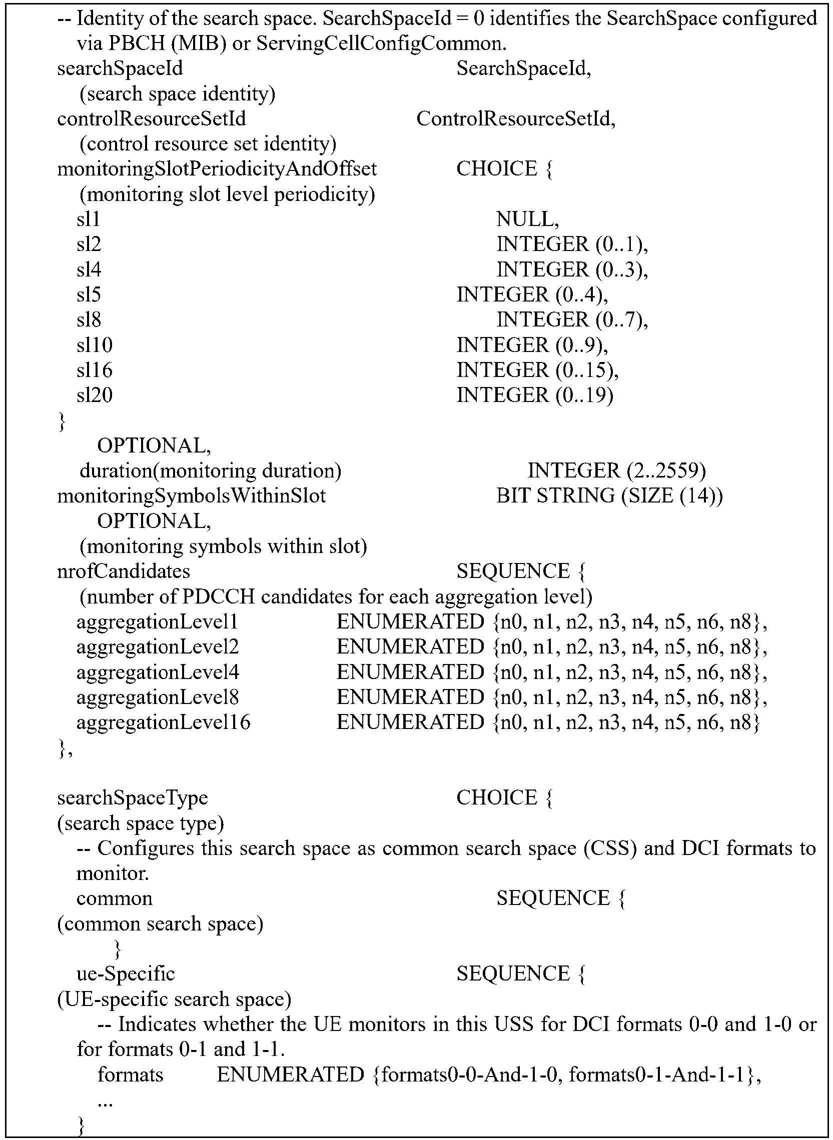

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2. According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.
- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.
- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given in Table 10 below, for example.

**[Table 10]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol (s) where UE may assume no transmission is intended for the UE |
| 2_2 | Transmission of TPC commands for PUCCH and PUSCH |
| 2_3 | Transmission of a group of TPC commands for SRS transmis sions by one or more UEs |

In a 5G system, the search space at aggregation level L in connection with control resource set p and search space set s may be expressed by Equation 1 below.$L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊\frac{{N}_{CCE , p}}{L}\right⌋\right\} + i$
- *L*: aggregation level
- *n_{CI}*: carrier index
- *N_{CCE,p}*: total number of CCEs existing in control resource set*p*
- ${n}_{s , f}^{μ}$: slot index
- ${M}_{s , max}^{\left(L\right)}$: number of PDCCH candidates at aggregation level L
- ${m}_{s , {n}_{CI}} = 0 , … , {M}_{s , max}^{\left(L\right)} - 1$: PDCCH candidate index at aggregation level L
- *i* = 0, ..., *L* -1
- ${Y}_{p , {n}_{s , f}^{μ}} = \left({A}_{p}⋅{Y}_{p , {n}_{s , f}^{μ} - 1}\right) mod D$, *Y*_{*p,*-1} *= n_{RNTI}* ≠ 0 , *Aₚ* = 39827 *for pmod*3 = 0 , *Aₚ* = 39829 *for pmod*3 = 1 , *Aₚ =* 39839 *for pmod*3 = 2, *D* = 65537
- *n_{RNTI}*: UE identity

The ${Y}_{p , {n}_{s , f}^{μ}}$ value may correspond to 0 in the case of a common search space.

The ${Y}_{p , {n}_{s , f}^{μ}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

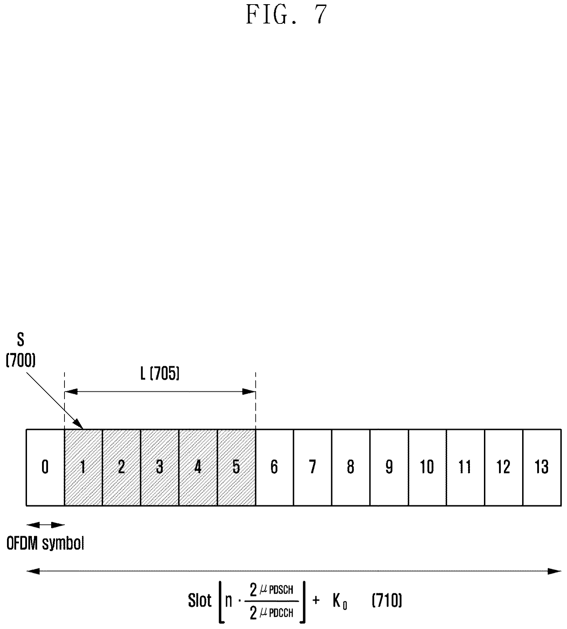

FIG. 7 illustrates an example of frequency domain resource allocation with regard to a PDSCH or PUSCH in a wireless communication system according to an embodiment of the disclosure;

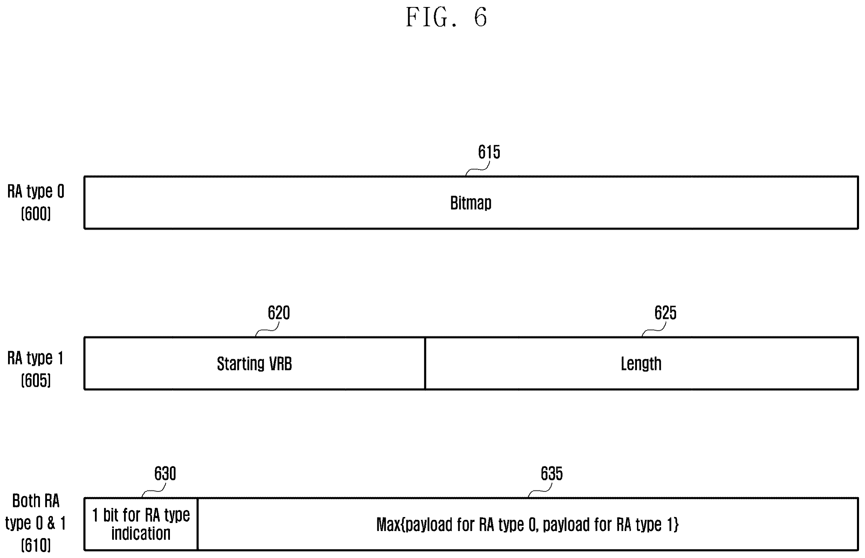

FIG. 6 illustrates three frequency domain resource allocation methods of type-0 600, type-1 605, and dynamic switch 610, which are configurable through a higher layer in an NR wireless communication system.

Referring to FIG. 6, in case that a UE is configured to use only resource allocation type-0 through higher-layer signaling (600), partial downlink control information (DCI) for allocating a PDSCH/ PUSCH to the UE includes a bitmap configured by N_{RBG} bits. As used herein, N_{RBG} refers to the number of resource block groups (RBGs) determined according to the size of the bandwidth part indicated by the bandwidth part indicator and higher layer parameter rbg-Size, as in Table 11 below, and data is transmitted in the RBG marked as 1 by the bitmap.

**[Table 11]**

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

The BWP size refers to the number of RBs included in the BWP. More specifically, in case that resource allocation type-0 is indicated to a UE, the length of the frequency domain resource assignment (FDRA) field of the DCI received by the UE is equal to the number of RBGs (N_{RBG}), and ${N}_{RBG} = \left⌈\left({N}_{BWP}^{size}+\left({N}_{BWP}^{start} mod P\right)\right)/P\right⌉$ *.* The first RBG includes as many RBs as ${RBG}_{0}^{size} = P - {N}_{BWP}^{size} mod P$ *,* and the last RBG includes as many RBs as ${RBG}_{last}^{size} = \left({N}_{BWP}^{start}+{N}_{BWP}^{size}\right) mod P$ if $\left({N}_{BWP}^{start}+{N}_{BWP}^{size}\right) mod P > 0$, and includes as many RBs as ${RBG}_{last}^{size} = P$ otherwise. The other RBGs each include P RBs. Here, P refers to the number of nominal RBGs as determined according to Table 10. In case that the UE is configured to use only resource allocation type-1 through higher-layer signaling (605), the DCI for allocating a PDSCH/PUSCH to the corresponding UE includes frequency domain resource assignment (FDRA) information configured by as many bits as $\left⌈{log}_{2}\left({N}_{RB}^{BWP}∗\left({N}_{RB}^{BWP}+1\right.\right)/2\right⌉$. Here, ${N}_{RB}^{BWP}$ refers to the number of RBs included in the BWP. The base station may thereby configure a starting VRB 620 and the length 625 of a frequency domain resource allocated consecutively therefrom. As an example, the FDRA may be have a value called a resource indication value (RIV), and the RIV value may indicate a starting VRB 620 and the number 625 of consecutive RBs therefrom (LRBs).

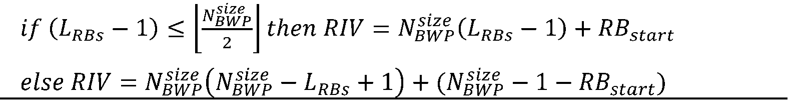

In the case in which the UE is configured to use both resource allocation type-0 and resource allocation type-1 through higher layer signaling (610), partial DCI for allocating a PDSCH to the corresponding UE includes frequency domain resource allocation information including as many bits as the larger value 635 among the payload 615 for configuring resource allocation type-0 and the payload 620 and 625 for configuring resource allocation type-1. The conditions for this will be described again later. One bit may be added to the foremost part (MSB) of the frequency domain resource allocation information inside the DCI, and if the bit has the value of "0", use of resource allocation type-0 may be indicated, and if the bit has the value of "1", use of resource allocation type-1 may be indicated.

Hereinafter, a time domain resource allocation method regarding a data channel in a 5G system will be described.

A base station may configure a table for time domain resource allocation information regarding a PDSCH and a PUSCH for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

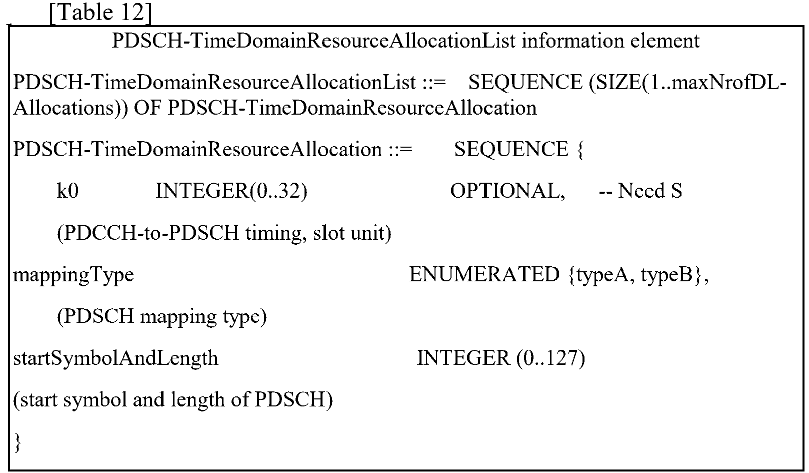

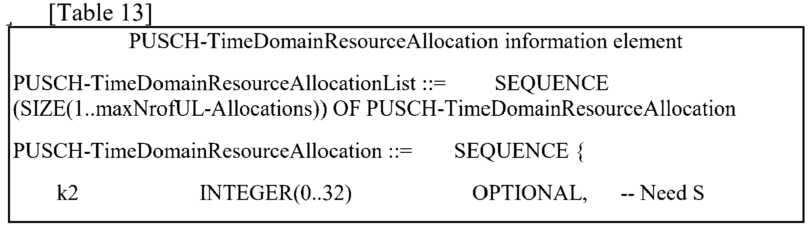

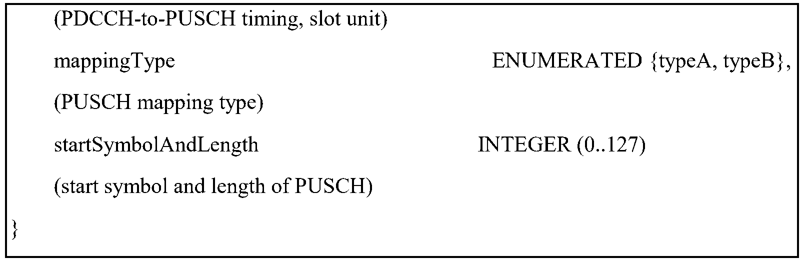

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station. FIG. 7 illustrates an example of time domain resource allocation with regard to a PDSCH in a wireless communication system according to an embodiment of the disclosure.

Referring to FIG. 7, the base station may indicate the time domain location of a PDSCH resource according to the subcarrier spacing (SCS) (*µ*_{PDSCH}, *µ*_{PDCCH}) of a data channel and a control channel configured by using a higher layer, the scheduling offset (K0) value, and the OFDM symbol start location 700 and length 705 within one slot dynamically indicated through DCI.

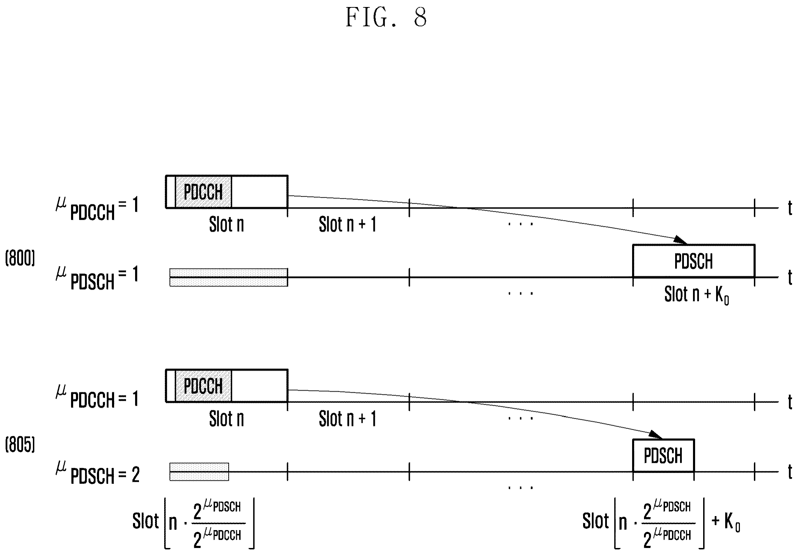

FIG. 8 illustrates an example of time domain resource allocation according to subcarrier spacings with regard to a data channel and a control channel in a wireless communication system according to an embodiment of the disclosure.

Referring to FIG. 8, if the data channel and the control channel have the same subcarrier spacing 800 (*µ_{PDSCH}* =*µ_{PDCCH}*), the slot number for data and that for control are identical, and the base station and the UE may accordingly generate a scheduling offset in conformity with a predetermined slot offset K0. Contrarily, if the data channel and the control channel have different subcarrier spacings 805 (*_{PDSCH}* ≠ *µ_{PDCCH}*), the slot number for data and that for control are different, and the base station and the UE may accordingly generate a scheduling offset in conformity with a predetermined slot offset K0 with reference to the subcarrier spacing of the PDCCH.

Hereinafter, embodiments of the disclosure will be described in detail in conjunction with the accompanying drawings. The contents of the disclosure may be applied to frequency division duplex (FDD) and time division duplex (TDD) systems, As used herein, upper signaling (or upper layer signaling") is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a UE, an MS, a cellular phone, a smartphone, a computer, or a multimedia system capable of performing a communication function. In the following description of embodiments of the disclosure, 5G systems are described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.
- MIB
- SIB or SIB X (X=1, 2,...)
- RRC
- MAC CE

In addition, L1 signaling may refer to signaling corresponding to at least one signaling method among signaling methods using the following physical layer channels or signaling, or a combination of one or more thereof.
- PDCCH
- DCI
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- PUCCH
- Uplink control information (UCI)

Hereinafter, the above examples may be described through several embodiments, but they are not independent of each other, and one or more embodiments may be applied simultaneously or in combination.

In the following description, "A/B/C" may be understood as at least one of A, B, or C.

Hereinafter, MC-DCI will be described.

Generally, a UE receives one piece of DCI, and the one piece of DCI may include scheduling information for one cell. For example, in the case of DCI format 0_0/0_1/0_2, one PUSCH may be scheduled for one uplink cell. In addition, in the case of DCI format 1_0/1_1/1_2, one PDSCH may be scheduled for one downlink cell. The scheduled cell may be indicated by a carrier indication field (CIF) in the DCI format.

However, according to this scheme, multiple pieces of DCI need to be transmitted/received in case that a PDSCH or PUSCH is scheduled in each of multiple cells. As a result, DCI overhead is increased. In order to reduce the DCI overhead, one DCI may schedule a PDSCH or PUSCH for each of multiple cells. For the sake of convenience, this may be referred to as multi-cell DCI (MC-DCI).

Cells which may be scheduled by the MC-DCI may be configured via higher-layer signaling. For example, it is assumed that the MC-DCI is capable of scheduling (co-scheduling) cell 0, cell 1, cell 2, and cell 3. Upon receiving the MC-DCI, the UE may receive scheduling information for the cell 0, cell 1, cell 2, and cell 3. The scheduling information may include time domain resource allocation information or frequency domain resource allocation information used to transmit/receive a data channel (PDSCH in the case of downlink, and PUSCH in the case of uplink) in each cell. Thus, the UE may acquire the scheduling information for each cell through the MC-DCI, and transmit/receive a data channel in each cell.

In a specific situation, there may be a case in which the base station cannot schedule all cells configured for the UE. For example, although the base station configures, for the UE, four cells (e.g., cell 0, cell 1, cell 2, and cell 3) for scheduling via the MC-DCI, scheduling for some of the cells may not possible because they are subject to scheduling for other UEs, because of poor channel conditions, or for other reasons. In this case, the base station should be able to indicate to the UE which of the preconfigured cells subject to scheduling via MC-DCI are cells subject to scheduling.

This indication may be done based on one of the following two methods.

In the first method, the UE may acquire, from the MC-DCI, information indicating co-scheduled cells via the MC-DCI among the preconfigured cells (e.g., cell 0, cell 1, cell 2, cell 3). More specifically, the base station may configure a table including cells scheduled for the UE. For example, the rows in this table may have unique indices. The index of each row may include the indices of the scheduled cells. For example, row 0 may be configured with {cell 0, cell 1}, row 1 may be configured with {cell 2, cell 3}, and row 2 may be configured with {cell 0, cell 1, cell 2, cell 3}. The UE may acquire, from the MC-DCI, a value indicating the index of the row. Therefore, the UE may determine scheduled cells, based on the above value.

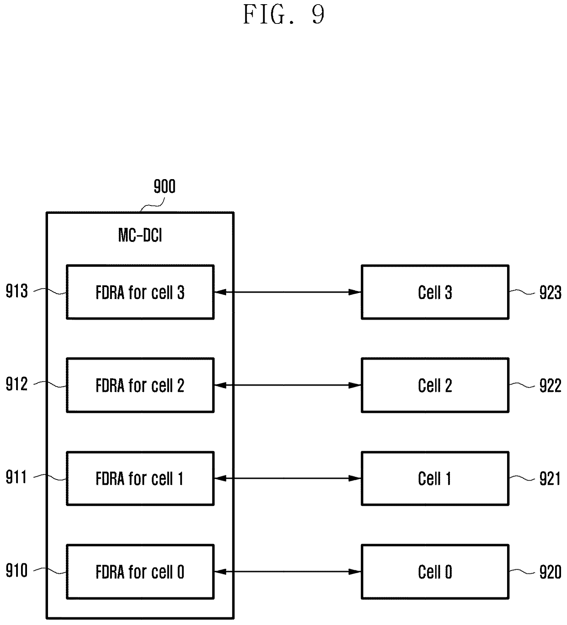

In the second method, the UE may make a determination, based on an FDRA field of the MC-DCI. FIG. 9 illustrates an example in which MC-DCI includes multiple FDRA fields. Referring to FIG. 9, MC-DCI 900 may include multiple FDRA fields. In addition, each FDRA field may correspond to a specific cell. In other words, if cells that may be scheduled via the MC-DCI 900 are configured as cell 0 920, cell 1 921, cell 2 922, and cell 3 923, the MC-DCI may include an FDRA field 910 for cell 0, an FDRA field 911 for cell 1, an FDRA field 912 for cell 2, and an FDRA field 913 for cell 3. The UE may determine whether each cell has been scheduled, based on the value of the FDRA field'.

The FDRA fields may be divided into fields having valid values and fields having invalid values. The valid value refers to a case in which frequency domain assignment corresponding to the value of the corresponding FDRA field exists. Contrarily, the invalid value may refer to a case in which frequency domain assignment corresponding to the value of the corresponding FDRA field does not 0exist.

For example, the valid and invalid values will be described based on FDRA type-0. FDRA type-0 is a method in which scheduled RBs (or RBGs) are indicated based on a bitmap. Here, each bit in the FDRA field corresponds to RBs (or RBGs). If a bit has a value of "1", the RBs (or RBGs) corresponding to the bit are scheduled, and if a bit has a value of "0", the RBs (or RBGs) corresponding to the bit are not scheduled. Accordingly, a case where at least one bit has a value of "1" may be determined as the valid value, and a case where all bits have a value of "0" may be determined as the invalid value.

For example, the valid and invalid values will be described based on FDRA type-1. FDRA type-1 is a method in which scheduled RBs are indicated based on resource indication values (RIVs). Here, FDRA Type-1 may schedule consecutive RBs in the frequency domain. According to FDRA type-1, the FDRA field may indicate an RIV value, and the index of a starting RB and the number of consecutive RBs from the starting RB may be indicated via the RIV value. The RIV value may be one of 0, 1, ..., N*(N+1)/2 -1. Here, N is the number of RBs included in the BWP (or frequency domain) in which a data channel is scheduled. Therefore, a case where the RIV value is one of 0, 1, ..., N*(N+1)/2-1 may be determined as the valid value, and a case where the RIV value is a value equal to or greater than N*(N+1)/2 may be determined as the invalid value.

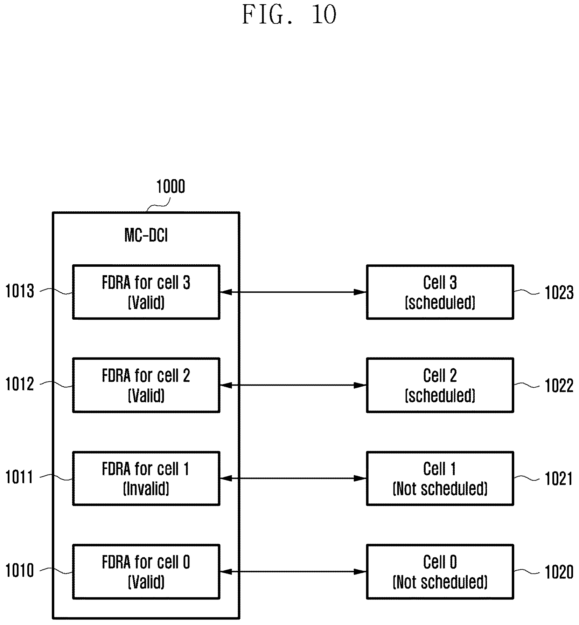

FIG. 10 illustrates an example of a method for determining cells scheduled based on multiple FDRA fields included in MC-DCI. Referring to FIG. 10, the MC-DCI 1000 may include FDRA fields for multiple cells (e.g., cell 0 1020, cell 1 1021, cell 2 1022, and cell 1023), respectively, for example, an FDRA field 1010 for cell 0, an FDRA field 1011 for cell 1, an FDRA field 1012 for cell 2, and an FDRA filed 1013 for cell 3. The UE may determine the validity of each FDRA field. For example, the UE may determine that the FDRA field 1010 for cell 0, the FDRA field 1012 for cell 2, and the FDRA field 1013 for cell 3 are valid, and may determine that the FDRA field 1011 for cell 1 is invalid. In this case, cell 1 determined to be invalid may be a non-scheduled cell, and cell 0, cell 2, and cell 3 determined to be valid may be scheduled cells.

The UE may determine the length of MC-DCI in different ways according to two methods. This is as follows.

In the case of the first method, the length of MC-DCI may be determined as follows.

The length of MC-DCI for scheduling a downlink data channel is determined according to an RRC configuration for active downlink BWPs of cells that can be simultaneously scheduled, based on a cell combination table configured by a higher layer signal. For reference, the cell combination table may include a plurality of combinations of cells that can be scheduled at the same time. For example, one combination of the cell combination table may be {cell 0, cell 1}, and another combination may be {cell 2, cell 3}. The MC-DCI may include an indicator (e.g., an indicator for distinguishing between {cell 0, cell 1} and {cell 2, cell 2}) indicating one of the simultaneously schedulable cell combinations in a cell combination table. In case that the cell combination table configured by the higher layer signal includes only one combination that can be scheduled simultaneously, the UE may determine that cells corresponding to the combination are cells that are always scheduled simultaneously.

The length of the MC-DCI for scheduling a downlink data channel is identical for active downlink BWPs of all simultaneously schedulable cell combinations in the cell combination table, and is the same as the largest payload size among DCI payloads according to the active downlink BWPs of all the simultaneously schedulable cell combinations in the cell combination table. In other words, the length of the MC-DCI is determined as the longer length between the DCI payload determined in the case of the {cell 0, cell 1} combination and the DCI payload determined in the case of the {cell 2, cell 3} combination. The shorter DCI payload may be padded with "0" to match the longer length.

The length of the MC-DCI for scheduling an uplink data channel is determined according to the RRC configuration of the active uplink BWP of cells which may be simultaneously scheduled, based on a cell combination table. The description of the cell combination table may refer to the above description regarding the downlink data channel. The length of the MC-DCI for scheduling an uplink is identical for active uplink BWPs of all simultaneously schedulable cell combinations in the cell combination table, and is the same as the largest payload size among DCI payloads according to the active uplink BWP of all the simultaneously schedulable cell combinations in the cell combination table.

In the case of the second method, the length of the MC-DCI may be determined as follows.

The length of MC-DCI for scheduling a downlink data channel is determined according to an RRC configuration for all active downlink BWPs of cells in the combination of cells that can be simultaneously scheduled by MC-DCI configured by higher layer signaling. The length of MC-DCI for scheduling an uplink data channel is determined according to an RRC configuration for all active uplink BWPs of cells in the combination of cells that can be simultaneously scheduled by MC-DCI configured by higher layer signaling.

In both of the above methods, the UE determines the length of the MC-DCI according to the RRC configuration of the active BWP. Next, the disclosure relates to a method for determining the length of the MC-DCI.

### First embodiment: A DCI design method when one cell is deactivated

When the UE determines the length of MC-DCI, this determination may be based on the RRC configuration of the active BWP of each cell. However, the UE may not be able to determine the active BWP of a specific cell. For example, a specific one of the cells configured to be simultaneously scheduled for the UE by MC-DCI may be deactivated. In the case of a deactivated cell, the cell does not transmit an SRS, does not report CSI, does not transmit a UL-SCH (which may be understood as a PUSCH), does not transmit a RACH, does not monitor a PDCCH, and does not transmit a PUCCH. However, since the deactivated cell is already included in one of the cells scheduled by MC-DCI, the MC-DCI may include scheduling information for the cell. In the case of a deactivated cell, the active BWP of the deactivated cell may not be determined.

A deactivated cell among cells simultaneously schedulable by the MC-DCI may be regarded as having at least one of the following BWPs as an active BWP, and the length of MC-DCI may be determined accordingly. That is, the length of MC-DCI is determined based on the RRC configuration of one of the following BWPs.

In the case of MC-DCI for scheduling a downlink data channel, the length of the MC-DCI may be determined based on RRC configuration information of a downlink BWP corresponding to firstActiveDownlinkBWP-Id. More specifically, the base station may configure a firstActiveDownlinkBWP-Id for a specific cell for the UE. The firstActiveDownlinkBWP-Id may have a value of one of 0, 1, ... , maxNrofBWPs. Here, maxNrofBWPs is the maximum number of BWPs in a cell and may be 4 as an example. That is, firstActiveDownlinkBWP-Id may be used as an identifier indicating one of the downlink BWPs configured for the UE. When a UE is indicated to activate a deactivated cell, the first activated downlink BWP is the downlink BWP corresponding to firstActiveDownlinkBWP-Id.

The UE may receive an indication of activation or deactivation of a cell through a MAC-CE. In case that the UE is indicated to activate one cell, the UE may transmit a HARQ-ACK corresponding to a PDSCH that transmits a MAC-CE to the base station, and then activate the cell after a predetermined time period. When the cell is activated, the first activated downlink BWP may be a downlink BWP corresponding to firstActiveDownlinkBWP-Id.

In case that the UE uses the RRC configuration information of the downlink BWP corresponding to firstActiveDownlinkBWP-Id when determining the length of MC-DCI, the following advantages may be obtained. The UE may monitor the MC-DCI based on the same DCI length, regardless of whether the deactivated cell has been activated or not. Therefore, even if the UE fails to receive a MAC-CE indicating the activation information of a specific cell, the UE may continue to monitor MC-DCI, based on the same DCI length.

Alternatively, in the case of MC-DCI for scheduling a downlink data channel, the length of the MC-DCI may be determined by using RRC configuration information of the downlink BWP having the lowest index among the configured downlink BWP. Alternatively, the length of the MC-DCI may be determined by using the RRC configuration information of the downlink BWP having the highest index.

Alternatively, in the case of MC-DCI for scheduling a downlink data channel, the length of the MC-DCI may be determined by using RRC configuration information of a BWP corresponding to the initialDownlinkBWP among the configured downlink BWPs. Here, the downlink BWP corresponding to initialDownlinkBWP is a downlink BWP that is first activated when the UE accesses the cell.

Alternatively, in the case of MC-DCI for scheduling a downlink data channel, the length of the MC-DCI may be determined by using the RRC configuration information of the BWP corresponding to defaultDownlinkBWP-Id among the configured downlink BWPs. Here, the downlink BWP corresponding to defaultDownlinkBWP-Id may be a downlink BWP that is activated after the bwp-InactiveTimer expires.

Alternatively, in the case of MC-DCI for scheduling a downlink data channel, the length of the MC-DCI may be determined using RRC configuration information of a downlink BWP configured for determining the MC-DCI length among the configured downlink BWPs. The downlink BWP configured for determining the MC-DCI length may be one of a plurality of downlink BWPs configured for one cell, and may be determined based on a downlink BWP ID configured by a higher layer signal (e.g., an RRC signal). In addition, in the absence of a higher layer signal, the UE may determine the length of MC-DCI, based on a downlink BWP corresponding to the lowest ID or the highest ID among the downlink BWP IDs of downlink BWPs configured for one cell.

In the case of MC-DCI for scheduling an uplink data channel, the length of the MC-DCI may be determined by using RRC configuration information of the uplink BWP corresponding to firstActiveUplinkBWP-Id. More specifically, the base station may configure firstActiveUplinkBWP-Id for a specific cell for the UE. The firstActiveUplinkBWP-Id may have a value of 0, 1, ... , or maxNrofBWPs. Here, maxNrofBWPs may indicate the maximum number of BWPs in a cell, and may be 4 as an example. That is, firstActiveUplinkBWP-Id may be used as an indicator for indicating one of uplink BWPs configured for the UE. In case that the UE is indicated to activate a deactivated cell, the first activated uplink BWP is the uplink BWP corresponding to firstActiveUplinkBWP-Id.

For reference, the UE may receive an indication of cell activation or deactivation through a MAC-CE. In case that the UE is indicated to activate a single cell, the UE may activate the cell after transmitting, to the base station, a HARQ-ACK corresponding to a PDSCH for transmission of the MAC-CE and after predetermined time has elapsed. When the cell is activated, the first activated uplink BWP may be the uplink BWP corresponding to firstActiveUplinkBWP-Id.

In case that the UE uses the RRC configuration information of the uplink BWP corresponding to firstActiveUplinkBWP-Id to determine the length of the MC-DCI, the following advantages may be obtained. The UE may monitor the MC-DCI based on the same DCI length regardless of whether the deactivated cell has been activated. Therefore, even if a UE fails to receive a MAC-CE indicating activation information of a specific cell, the UE may monitor MC-DCI based on the same DCI length.

Alternatively, in the case of MC-DCI for scheduling an uplink data channel, the length of the MC-DCI may be determined by using the RRC configuration information of the uplink BWP with the lowest index among the configured uplink BWPs. Alternatively, the length of the MC-DCI may be determined by using RRC configuration information of the uplink BWP with the highest index.

Alternatively, in the case of MC-DCI for scheduling an uplink data channel, the length of the MC-DCI may be determined by using RRC configuration information of a BWP corresponding to initialUplinkBWP among the configured uplink BWPs. Here, the uplink BWP corresponding to initialUplinkBWP is the uplink BWP that the UE first activates when connecting to the cell.

In the case of MC-DCI for scheduling an uplink, the length of the MC-DCI may be determined by using RRC configuration information of a BWP corresponding to defaultUplinkBWP-Id among the configured uplink BWPs. Here, the uplink BWP corresponding to defaultUplinkBWP-Id may be an uplink BWP that is activated after the bwp-InactiveTimer of the UE is expired.

Alternatively, in the case of MC-DCI for scheduling an uplink data channel, the length of the MC-DCI may be determined by using RRC configuration information of an uplink BWP configured for the purpose of determining the length of the MC-DCI, among the configured uplink BWPs. Here, the uplink BWP configured for determining the length of the MC-DCI may be one of a plurality of uplink BWPs configured in one cell, and may be determined based on an uplink BWP ID configured by a higher layer signal (e.g., an RRC signal). In addition, without the higher layer signal, the UE may determine the length of MC-DCI, based on the uplink BWP corresponding to the lowest ID or the highest ID among the downlink BWP IDs of the uplink BWP configured in one cell.

For reference, the BWP (e.g., firstActiveDownlinkBWP-Id, firstActiveUplinkBWP-Id, defaultDownlinkBWP-Id, defaultUplinkBWP-Id, initial DL BWP, or initial UL BWP) used in the above embodiment may be applied only when the BWP is not a dormancy BWP. If the BWP is a dormancy BWP, the length of MC-DCI may be determined according to a second embodiment described below.

### Second embodiment: DCI design method in case that one cell is a dormancy SCell (secondary cell)

When the UE determines the length of the MC-DCI, this determination may be based on RRC configuration information of the active BWP of each cell. However, the UE may be unable to determine the active BWP of a specific cell. For example, a specific one of cells configured to be scheduled by MC-DCI for the UE may be indicated as a dormancy cell. If a cell is indicated as a dormancy cell, the UE may not perform PDSCH reception or PUSCH transmission for the cell. An SCell may be indicated as a dormancy cell.

In addition, one BWP among the downlink BWPs may be configured for the UE as a dormant BWP. When the dormant BWP is activated, the UE may not monitor a PDCCH, may not receive a DL-SCH, and may not report channel state information (CSI). That is, since the RRC configuration information of a dormant BWP does not include PDCCH-related configuration because PDCCH is not monitored, and does not include PDSCH-related configuration because PDSCH is not received. In other words, when a dormant BWP is activated in a single cell, RRC configuration information for determining the length of the MC-DCI may not exist.

For example, when the FDRA field of MC-DCI that schedules a downlink data channel is determined, and when the FDRA field corresponding to each cell is included in the MC-DCI, if a dormant BWP of one cell is activated, and if no information regarding the FDRA (e.g., information regarding the FDRA type, or the nominal RBG size in case of FDRA type-0) is configured for the dormant BWP, the UE may not be able to determine the length of the FDRA field corresponding to the cell for which the dormant BWP is activated. Therefore, the UE may determine the length of MC-DCI, based on at least one of the following methods.

In the first method, the UE may expect that PDSCH-related information is configured in RRC configuration information of a dormant BWP of a cell included in the MC-DCI by the base station. That is, the UE does not receive a PDSCH in the dormant BWP, but may acquire configuration information for the PDSCH for the purpose of determining the length of MC-DCI. For example, the UE may receive configuration of an FDRA type to the nominal RBG size in order to determine the length of the FDRA field. However, the FDRA field may be included in the MC-DCI, while a data channel may not be scheduled through the FDRA field.

In the first method, the UE may expect PDSCH information to be configured in the RRC configuration information of the dormant BWP, but this may cause additional overhead of a higher layer signal. In order to reduce the overhead, the UE may use a default configuration. That is, the UE may determine the length of the MC-DCI by assuming a default value among pieces of information regarding the PDSCH. Here, the "default value" may refer to a value when an optional field in the PDSCH configuration (PDSCH-Config) of the RRC configuration information is not configured, or a predetermined default value. If the default value is not determined, the UE may determine the length of the MC-DCI by using one of the following methods.
- The UE may assume the first configuration among the multiple configurations as a default value. For example, in the case of an FDRA type, the first configured resourceAllocationType0 among {resourceAllocationType0, resourceAllocationType1, dynamicSwitch} may be assumed as the default configuration.
- The UE may assume the configuration in which the length of the DCI field is minimized among multiple configurations as a default value. For example, in the case of FDRA type, the UE may obtain the length of the MC-DCI field by using {resourceAllocationType0, resourceAllocationType1, dynamicSwitch}, and may assume the configuration providing the shortest DCI length as a default value.

In a second method, the UE may determine the length of the MC-DCI by using RRC configuration information of another one BWP excluding the dormant BWP.

The method for determining one BWP in the second method may refer to the method of the first embodiment described above. Alternatively, when one cell of the UE is configured as a dormant BWP, the length of the MC-DCI may be determined based on the RRC configuration information of the BWP corresponding to firstOutsideActiveTimeBWP-Id to firstWithinActiveTimeBWP-Id, which is a BWP activated when the dormant operation is released. Here, firstOutsideActiveTimeBWP-Id may correspond to a BWP activated when SCell activation is indicated outside the active time, and firstWithinActiveTimeBWP-Id may correspond to a BWP activated when SCell activation is indicated within the active time.

### Third Embodiment: DCI design method excluding deactivate cell or dormancy SCell

In the first and second embodiments described above, the UE has determined the length of MC-DCI, based on RRC configuration information of at least one BWP of a cell. However, the UE may not receive PDSCH or PUSCH scheduling for a deactivated cell or dormancy SCell through the MC-DCI. That is, the scheduling information of a PDSCH or PUSCH corresponding to a deactivated cell or dormancy SCell may be excluded from the MC-DCI.

More specifically, the MC-DCI may include a field for each cell. In this case, a field corresponding to a cell in which a deactivated or dormant BWP is indicated may be excluded from the MC-DCI. For example, the description is given based on an FDRA field. The MC-DCI may include a FDRA field corresponding to each cell. In case that the UE receives an indication of a deactivated or dormant BWP for a certain cell, the UE may exclude the FDRA field for the cell from the MC-DCI. Therefore, the MC-DCI may not include an FDRA field for a cell in which a deactivated or dormant BWP is indicated. Since some fields are excluded from the MC-DCI, the UE may monitor the MC-DCI based on a smaller DCI length.

More specifically, the MC-DCI may include a field that indicates operation of multiple cells. For example, the base station may configure a table for the UE. Here, one field may provide an index of the row of the table, and each row has a plurality of columns corresponding thereto, and the plurality of columns may have a value for an operation of a corresponding cell. In this case, a column corresponding to a cell having indicated a deactivated or dormant BWP may be excluded from the table. For reference, when the values are duplicated in the columns other than the excluded column in the two rows, one of the two rows may be excluded. For example, assuming that {A, B, C} is configured in three columns of row 0, and {A, B, D} is configured in three columns of row 1. Each column corresponds to a cell in the order, and the information A, B, C, and D configured for each column may be configuration information for the operation of the corresponding cell. When a cell corresponding to the third column is indicated as a deactivated or dormant BWP, the third column may be excluded from the two rows. That is, row 0 has two columns {A, B}, and row 1 has two columns {A, B}. Accordingly, since the values included in the columns of the two rows are identical, one of the two rows may be excluded. In this case, among the rows including the same values, the row having the smallest (or largest) row index may be indicated by the MC-DCI.

According to the method for determining the DCI length, the UE and the base station may determine the DCI length.

### Fourth Embodiment: Method for determining the length of MC-DCI according to a duplex mode

According to an embodiment of the disclosure, the UE may determine the length of MC-DCI for scheduling multiple cells, by considering a duplex mode of a cell. The duplex mode may be one of time division duplex (TDD) or frequency division duplex (FDD). Time division duplex may be referred to as unpaired spectrum operation, and frequency division duplex may be referred to as paired spectrum operation.

One MC-DCI may schedule a PDSCH on multiple cells, or one piece of MC-DCI may schedule a PUSCH on multiple cells. If one piece of MC-DCI schedules a data channel (PDSCH or PUSCH) on multiple cells, a duplex mode to be used may be configured for each of the multiple cells. For example, when one MC-DCI schedules a PDSCH in two cells, the two cells may both be time division duplex, the two cells may both be frequency division duplex, or one of the two cells may be time division duplex and the other cell may be frequency division duplex. Note that the duplex mode of a cell may be determined according to a band to which a cell belongs. That is, a duplex mode may be determined for each band to which the cell belongs. For example, in case that two cells belong to one band, the duplex mode of the two cells may be a duplex mode defined for the band. In case that a time division duplex is defined for a band, the duplex modes of two cells may be a time division duplex. In case that frequency division duplex is defined in the band, the duplex modes of the two cells may be frequency division duplex. In case that two cells belong to different bands, the duplex modes of the two cells follow the duplex modes defined for the bands to which they belong. In case that a time division duplex mode is defined for the band to which one of the two cells belongs, the one cell follows the time division duplex mode, and in case that a frequency division duplex mode is defined for the band to which the other of the two cells belongs, the other cell follows the FDD mode.

After the RRC configuration, the UE may receive a configuration of up to four downlink (DL) BWPs and up to four uplink (UL) BWPs in one cell from the base station. Each downlink BWP of each cell may have a unique index. The index may be, for example, 1, 2, 3, or 4. Each uplink BWP of each cell may have a unique index. The index may be, for example, 1, 2, 3, or 4. For reference, the UE may additionally receive a configuration of a downlink initial BWP (initial DL BWP) and an uplink initial BWP (initial UL BWP) for a cell from a base station, and the downlink initial BWP and the uplink initial BWP may be used by the UE when the UE initially accesses the cell. The index of the downlink initial BWP and the uplink initial BWP may be 0.

When a BWP is configured in a cell using time division duplex, the following constraints may be applied. A downlink BWP and an uplink BWP having the same index may be linked to each other. A pair of a downlink BWP and an uplink BWP that are linked to each other may be referred to as a BWP pair. The center frequencies of the downlink BWP and the uplink BWP belonging to a BWP pair may always be the same. In addition, the BWP switching may occur identically in a downlink BWP and an uplink BWP belonging to a BWP pair. More specifically, when a downlink BWP having index A is indicated as an active downlink BWP for the UE, the UE may consider an uplink BWP having the same index A as an active uplink BWP. That is, the UE may not activate a downlink BWP and an uplink BWP having different indexes at the same time point.

In the case of configuring a BWP in a cell using frequency division duplex, the above-described constraint may not exist. That is, the UE may activate a downlink BWP and an uplink BWP having different indices at the same time point. More specifically, in case that a downlink BWP having an index of A is indicated as an active downlink BWP for the UE, the UE may switch a downlink BWP having an index of A to an active downlink BWP. However, the active uplink BWP may not be switched according to the indication. That is, in case that the active uplink BWP of the UE at the time of receiving the indication is the uplink BWP having index B, the UE may continue to regard the uplink BWP having index B as the active BWP, even though the indication is received.

In case that the UE receives MC-DCI that schedules PDSCHs on multiple cells or MC-DCI that schedules a PUSCH on multiple cells, the UE may acquire an indicator indicating a BWP included in the MC-DCI. The indicator for indicating a BWP in the MC-DCI may be included in a BWP indicator field. The UE may determine the length of a BWP indicator for indicating a BWP in MC-DCI, based on the number of BWP configured for cells in which a PDSCH or PUSCH may be scheduled. For example, the length of a BWP indicator field included in MC-DCI for scheduling a PDSCH on multiple cells may be determined based on the maximum value among the number of downlink BWPs configured in multiple cells. With regard to N multiple cells, when the number of downlink BWPs configured for the i-th cell is M_i, the maximum value may be expressed as M = max{M_1, M_2, ... , M_N}. In this case, the length of the BWP indicator field may be B=ceil(log₂(M)) bits. The B bits may indicate the downlink BWP to be activated in the N cells.

For example, in case that B=2 bits and the value of B is "00", a downlink BWP having BWP index 1 may be activated for each of N cells, in case that the value of B is "01", a downlink BWP having BWP index 2 may be activated for each of N cells, in case that the value of B is "10", a downlink BWP having BWP index 3 may be activated for each of N cells, and in case that the value of B is "11", a downlink BWP having BWP index 4 may be activated for each of N cells.

For example, if B=1 bit and the value of B is "0", a downlink BWP having a BWP index of 1 is activated for each of the N cells, and if the value of B is "1", a downlink BWP having a BWP index of 2 is activated for each of the N cells.

The number of downlink BWP configured for N cells may differ from each other. For example, the number of downlink BWPs configured for the first cell may be 4 (with indexes 1, 2, 3, and 4), and the number of downlink BWPs configured for the second cell may be 2 (with indexes 1 and 2). In this case, B may be 2 bits (B=2 bits). In case that the value represented by B bits indicates "10" or "11", there may be no downlink BWP corresponding to the value represented by B bits in the second cell.

In this case, the downlink BWP previously activated in the second cell may be maintained. That is, in case that the B-bit BWP switching indicator of the MC-DCI indicates a value other than the BWP index configured for the cell, the UE may not apply the BWP switching indicator indicated in the MC-DCI to the cell. In addition, the previously activated downlink BWP may not be switched and may be maintained as is.

Alternatively, in this case, a specific downlink BWP may be activated in the second cell. The specific downlink BWP may be the downlink BWP having the lowest index, the downlink BWP (initial downlink BWP) used for initial access to the cell, or the downlink BWP (firstActiveDownlinkBWP-Id) which is first activated after the cell is activated.

Alternatively, in this case, the BWP switching indicator may be interpreted by using only the bits required in the second cell in the B-bit BWP switching indicator in the second cell. Here, the number of bits required for the second cell may be B_i=ceil(log₂(M_i)). M_i may be the number of downlink BWP configured in the second cell. The UE may interpret the least significant bit (LSB) B_i bits among B bits as a BWP switching indicator field. If B_i=1, 1 LSB bit among B bits may be taken and interpreted as a BWP switching indicator field. That is, if the LSB 1 bit of B bits is "0", a downlink BWP having BWP index 1 may be activated in the second cell, and if the LSB 1 bit of B bits is "1", a downlink BWP having BWP index 2 may be activated in the second cell. The use of the LSB B_i bits among B bits is only an example, and B_i bits determined in a different manner or a specific number of bits among the B bits may be used.

Alternatively, in this case, the index of the downlink BWP configured in the second cell may be obtained, based on the index of the BWP indicated by the BWP switching indicator of B bits in the second cell. For example, the BWP switching indicator of B bits may indicate the BWP index having one of I=1, 2, 3, and 4, and the index of the downlink BWP configured for the second cell may be 1 and 2. An index of a downlink BWP indicated in the second cell may be obtained by a formula of ((I-1) mod M_i)+1. Here, M_i may be the number of downlink BWPs configured for the second cell.

In the following description of the disclosure, in case that a BWP corresponding to a BWP switching indicator is not configured in a cell, this case may be referred to as an out-of-range indication of a BWP index, and the indication may be interpreted by at least one of the above methods in the case.

When a cell is first activated after being deactivated, a downlink BWP activated in the cell is a downlink BWP having an index of firstActiveDownlinkBWP-Id, and an uplink BWP activated in the cell is an uplink BWP having an index of firstActiveUplinkBWP-Id. If the cell uses time division duplex, the activated downlink BWP and uplink BWP should have the same index, and thus firstActiveDownlinkBWP-Id and firstActiveUplinkBWP-Id may be the same. If the cell uses frequency division duplex, the activated downlink BWP and uplink BWP may have the same or different indexes, and thus firstActiveDownlinkBWP-Id and firstActiveUplinkBWP-Id may have the same or different values. The activation or deactivation of the cell may be indicated to the UE via a MAC-CE.

A dormant BWP may be configured for a cell. A dormant downlink BWP may be one of the downlink BWPs configured for a cell. For example, the UE may receive an indication of whether a cell is in a dormant state or a non-dormant state through a dormancy indicator through L1 signaling. If the cell is indicated as a dormant state, the UE may regard a dormant downlink BWP in the cell as an active downlink BWP. If a cell uses time-division duplex, the UE may regard the uplink BWP having the same index as the dormant downlink BWP as an active uplink BWP. If the cell uses frequency division duplex, the UE may continue to consider the existing activated uplink BWP as an uplink BWP. For reference, when the cell is in a dormant state, the UE may not transmit a UL-SCH or an SRS in an activated UL BWP. The UE may perform the following operations.
1> if a BWP is activated and the active DL BWP for the Serving Cell is dormant BWP:
   2> stop the bwp-InactivityTimer of this Serving Cell, if running.
   2> not monitor the PDCCH on the BWP;
   2> not monitor the PDCCH for the BWP;
   2> not receive DL-SCH on the BWP;
   2> not report CSI on the BWP, report CSI except aperiodic CSI for the BWP;
   2> not transmit SRS on the BWP;
   2> not transmit on UL-SCH on the BWP;
   2> not transmit on RACH on the BWP;
   2> not transmit PUCCH on the BWP;
   2> clear any configured downlink assignment and any configured uplink grant Type 2 associated with the SCell respectively;
   2> suspend any configured uplink grant Type 1 associated with the SCell;
   2> if configured, perform beam failure detection and beam failure recovery for the SCell if beam failure is detected.

The problem to be addressed in the disclosure is how to determine the length of MC-DCI when MC-DCI schedules multiple cells, and when one of the cells is in a deactivated or dormant state. As described above, through the first to third embodiments, the UE may determine the length of MC-DCI. However, in the above embodiments, the duplex mode of a cell is not considered. The disclosure describes a method for determining the length of MC-DCI based on a duplex mode of a cell.

The UE may adjust (or determine, or align) the length of MC-DCI for scheduling a PDSCH in multiple cells. In the following description, the MC-DCI may be referred to as downlink MC-DCI.

The UE may adjust (or determine, or align) the length of MC-DCI for scheduling a PUSCH in multiple cells. In the following description, the MC-DCI may be referred to as uplink MC-DCI.

If one of the cells schedulable by downlink MC-DCI is deactivated, the UE may use the configuration of a specific downlink BWP of the one cell to determine the length of the downlink MC-DCI. Here, a specific downlink BWP may be a downlink BWP disclosed in the first embodiment. For example, a specific downlink BWP may be a downlink BWP having firstActiveDownlinkBWP-Id. That is, the UE may determine the length of the downlink MC-DCI by using configuration information configured in the downlink BWP having firstActiveDownlinkBWP-Id.

The downlink BWP having the index firstActiveDownlinkBWP-Id may be a dormant downlink BWP. In this case, the UE may use the configuration of a different specific downlink BWP (a downlink BWP other than a dormant downlink BWP) to determine the length of the downlink MC-DCI. The specific downlink BWP (a downlink BWP other than the dormant downlink BWP) may be a downlink BWP disclosed in the second embodiment. For example, a specific downlink BWP may be a downlink BWP having an index of firstOutsideActiveTimeBWP-Id or firstWithinActiveTimeBWP-Id.

As described above, the UE may determine the length of downlink MC-DCI regardless of the duplex mode.

The length of uplink MC-DCI may be determined based on a duplex mode. Therefore, when the UE determines the length of uplink MC-DCI, the UE may use information regarding the duplex mode of the cell. Therefore, different methods may be used depending on whether the cell is a time division duplex or a frequency division duplex.

In case that one cell among the cells schedulable by the uplink MC-DCI is deactivated, or in case that one cell is in a dormant state (a cell in which a dormant downlink BWP is activated through a dormancy indicator), the UE may obtain a duplex mode of the cell in order to determine a length of the uplink MC-DCI. The duplex mode information of a cell may be determined according to the band to which the cell belongs.

In case that the cell uses a frequency division duplex mode, the UE may determine the length of uplink MC-DCI as follows.

In case that the cell is deactivated, the UE may use a configuration of a specific uplink BWP of the cell to determine the length of the uplink MC-DCI. Here, the specific uplink BWP may be the uplink BWP disclosed in the first embodiment above. For example, a particular uplink BWP may be an uplink BWP having firstActiveUplinkBWP-Id.

If the cell is in a dormant state, the length of the uplink MC-DCI may be determined by at least one of the following methods or a combination thereof:

In a first method, the UE may define a reference cell, determine the uplink BWP of a cell of a dormant state, based on the index of the activated uplink BWP in the reference cell, and determine the length of uplink MC-DCI, based on the configuration information of the uplink BWP. Here, the reference cell may be a cell having the lowest index, a cell in which the UE monitors the uplink MC-DCI, a cell serving as a basis for determining the number of blind decodings or the number of control channel elements (CCEs) of the uplink MC-DCI, a cell considered in aligning the length of the uplink MC-DCI, or a cell in which the UE transmits a PUCCH.

In a second method, the UE may determine the active uplink BWP currently activated in a cell of a dormant state, and may determine the length of uplink MC-DCI, based on control information of the active uplink BWP. Here, the currently activated active UL BWP may be a UL BWP indicated in the most recently received MC-DCI. For example, in case that the MC-DCI for scheduling an uplink in multiple cells is received, if the MC-DCI includes uplink BWP and scheduling information regarding a cell of a dormant state, an active uplink BWP may be switched to the indicated uplink BWP. Therefore, after receiving the MC-DCI, the UE may use the configuration information of the switched uplink BWP to determine the length of the uplink MC-DCI, including the cell of the dormant state.

According to the second method, the active uplink BWP of a cell in a dormant state may be switched according to the MC-DCI. However, even when the active uplink BWP of the cell is switched, the cell is a dormant cell, and thus the UE may not transmit the UL-SCH in the switched active uplink BWP and may not transmit the SRS. For example, when the UE receives MC-DCI for scheduling uplink transmission (e.g., PUSCH or SRS) in multiple cells, the MC-DCI may include a BWP indicator field. In a cell of a dormant state among the multiple cells, the active uplink BWP may be switched according to the BWP indicator field. However, the UE may ignore a PUSCH transmission scheduled for a cell in a dormant state, or the UE may expect that no PUSCH is scheduled for a cell in a dormant state. Here, the PUSCH not being scheduled for a predetermined cell may be indicated through an FDRA field corresponding to the cell in uplink MC-DCI. More specifically, if an invalid value is indicated in the FDRA field corresponding to one cell, the UE may determine that no PUSCH is scheduled for the cell. An invalid value of the FDRA field may be as follows.
- When RA type-0 is configured for a cell, if all bits are "0", the value is determined to be invalid.
- When RA type-1 is configured for a cell, if all bits are "1", and the value is determined to be an invalid value.
- When a dynamic switch of RA type-0 and RA type-1 is configured for a cell, if all bits are "0" or all bits are "1", the value is determined to be invalid.
- When RA type-2 is configured for a cell in the unlicensed band, and a subcarrier spacing of the cell is 15 kHz, if all bits are "1", the value is determined to be invalid.
- When RA type-2 is configured in the unlicensed band cell and the subcarrier spacing of the cell is 30kHz, if all bits are "0", the value is determined to be an invalid.

In a third method, when a dormancy indicator is received in the cell, the UE may determine an active uplink BWP which is activated, and may determine the length of uplink MC-DCI, based on control information of the active uplink BWP. The UE may receive a cell dormancy indicator for a cell and may switch the cell to a dormant state. In this case, the UE may determine the activated uplink bandwidth. Assuming that the determined active uplink bandwidth is not changed by MC-DCI, the UE may ignore MC-DCI indicating a bandwidth change. That is, the active uplink bandwidth of a cell in the dormant state may not be changed by MC-DCI. Therefore, the UE may determine the length of uplink MC-DCI by using the configuration information of the active uplink bandwidth.

According to the third method, the active uplink BWP of the dormant cell may not be switched according to the MC-DCI. In addition, since the cell is a dormant cell, the UE may not transmit a UL-SCH or an SRS in the switched active uplink BWP. For example, when the UE receives MC-DCI that schedules uplink transmission in multiple cells, the MC-DCI may include a BWP indicator field. Even if switching of an active uplink BWP is indicated according to the BWP indicator field for the cell in the dormant state among multiple cells, the UE may ignore the switching indication. That is, even though the BWP indicator field indicates a different uplink BWP other than the active uplink BWP for the cell, the UE may not switch the active uplink BWP to the indicated uplink BWP.

In a fourth method, the UE may determine the length of the uplink MC-DCI by using configuration information of an uplink BWP in which the index in the cell corresponds to a specific BWP ID. Here, the specific BWP ID may be firstActiveUplinkBWP-Id. Here, the specific BWP ID may be the lowest index (index 0). Alternatively, the specific BWP ID may be the BWP ID having the lowest index (index 1) among BWP IDs configurable by a higher layer signal. Alternatively, the specific BWP ID may be a value configured by a higher layer signal. Here, a specific BWP ID may be firstWithinActiveTimeBWP-Id or firstOutsideActiveTimeBWP-Id. Alternatively, the specific BWP ID may be an index of a downlink dormant BWP.

There may not be a UL BWP of the cell in a dormant state corresponding to the index of the active UL BWP of the reference cell determined in the first method. For example, the index of the active uplink BWP of the reference cell may be 4. The index of the uplink BWP of a cell in the dormant state may be 0 or 1. That is, in this case, the UE may not receive a configuration of an uplink BWP corresponding to index 4 in a cell in the dormant state.

In addition, there may be no uplink BWP of the cell of a dormant state corresponding to the index configured in a higher layer used in the fourth method. For example, firstWithinActiveTimeBWP-Id or firstOutsideActiveTimeBWP-Id is an index of a downlink bandwidth activated when the dormant state of a cell is released. In case that the cell is frequency division duplex, the UE may not receive a configuration of an uplink bandwidth paired with the downlink bandwidth. That is, the UE may not receive a configuration of an uplink bandwidth having the same index as that of the downlink bandwidth. Alternatively, for example, the downlink dormant BWP index is an index of a downlink bandwidth that is activated when the cell indicates a dormant state. In the case of a frequency division duplex cell, the UE may not receive a configuration of an uplink bandwidth paired with the downlink bandwidth. That is, the UE may not receive a configuration of an uplink bandwidth having the same index as the downlink bandwidth.

In case that an uplink bandwidth of a specific index is not configured for the UE as described above, this is the same as the case of out-of-range indication of a BWP indicator described above. Therefore, the UE may determine a BWP for determining the length of the MC-DCI by at least one of the methods for the out-of-range indication of the BWP indicator described above.

In case that the cell uses a TDD mode, the UE may determine the length of the uplink MC-DCI as follows.

In a method, if the cell is deactivated and a downlink BWP having an index of firstActiveUplinkBWP-Id configured for the cell is not a dormant downlink BWP, the UE may determine the length of uplink MC-DCI, based on the configuration of the uplink BWP having an index of firstActiveUplinkBWP-Id.

Note that firstActiveUplinkBWP-Id is used herein, but since this is a time division duplex mode, firstActiveUplinkBWP-Id may be the same as firstActiveDownlinkBWP-Id. That is, in the above method, firstActiveUplinkBWP-Id may be replaced by firstActiveDownlinkBWP-Id as follows.

If the cell is deactivated and the downlink BWP having the index of firstActiveDownlinkBWP-Id among the downlink BWP configured for the cell is not a dormant downlink BWP, the UE may determine the length of the uplink MC-DCI, based on the configuration of the uplink BWP having the index of firstActiveDownlinkBWP-Id.

In a method, if the cell is deactivated and the downlink BWP having an index of firstActiveUplinkBWP-Id (or firstActiveDownlinkBWP-Id) configured in the cell is a dormant downlink BWP, or if the cell is in a dormant state, the UE may determine the length of the uplink MC-DCI, based on one of the following methods or a combination thereof.

In a first method, the UE may define a reference cell, determine the uplink BWP of a cell in a dormant state, based on the index of the uplink BWP activated in the cell, and determine the length of uplink MC-DCI, based on the configuration information of the uplink BWP. Here, the reference cell may be a cell having the lowest index, a cell in which the UE monitors the uplink MC-DCI, a cell serving as a basis for determining the number of blind decodings or the number of CCEs of the uplink MC-DCI, a cell considered in aligning the length of the uplink MC-DCI, or a cell in which the UE transmits a PUCCH.

In a second method, the UE may determine the active uplink BWP currently activated in the cell in a dormant state, and may determine the length of uplink MC-DCI, based on the control information of the active uplink BWP. The currently active uplink BWP may be the uplink BWP indicated in the most recently received MC-DCI. For example, in case of receiving MC-DCI for scheduling uplink transmission in multiple cells, if the MC-DCI includes uplink BWP and scheduling information for a cell in a dormant state, the active uplink BWP may be switched to the indicated uplink BWP. For example, when a UE receives the MC-DCI that schedules downlink reception (PDSCH, CSI-RS, etc.) in multiple cells, and when the MC-DCI includes downlink BWP and scheduling information for a cell in a dormant state, although the downlink BWP of the cell may not be switched, the active uplink BWP may be switched to an uplink BWP corresponding to the indicated downlink BWP. The uplink BWP corresponding to the downlink BWP may be a BWP having the same index. Therefore, after receiving the MC-DCI, the UE may use the configuration information of the switched uplink BWP to determine the length of the uplink MC-DCI, which includes a cell in a dormant state.

According to the second method, the active uplink BWP of a cell in a dormant state may be switched according to MC-DCI. However, even when the active uplink BWP of the cell is switched, the cell is a dormant cell, and thus the UE may not transmit a UL-SCH in the switched active uplink BWP, and may not transmit an SRS. For example, when the UE receives MC-DCI for scheduling uplink transmission in multiple cells, the MC-DCI may include a BWP indicator field. The active uplink BWP may be switched in a cell of a dormant state among the multiple cells according to the BWP indicator field. For example, when the UE receives the MC-DCI for scheduling downlink reception in multiple cells, the MC-DCI may include a BWP indicator field. Even if the active downlink BWP is not switched according to the BWP indicator field in the cell of the dormant state among the multiple cells, the active uplink BWP may be switched to an uplink BWP corresponding to the indicated downlink BWP. However, the UE may ignore the PUSCH transmission scheduled for the dormant cell, or the UE may expect that no PUSCH is scheduled for the dormant cell. In this case, the PUSCH not being scheduled for a predetermined cell may be indicated through an FDRA field corresponding to the cell in uplink MC-DCI. The specific content of the FDRA field may follow the description given above.

In a third method, when a dormancy indicator is received in the cell, the UE may determine an active uplink BWP that is activated, and may determine a length of uplink MC-DCI, based on control information of the active uplink BWP. The UE may receive a cell dormancy indicator for a cell and switch the cell to a dormant state. In this case, the UE may determine the activated uplink bandwidth. Assuming that the identified active UL bandwidth is not changed by MC-DCI, the UE may ignore MC-DCI indicating a bandwidth change. That is, the active uplink bandwidth of the cell in the dormant state may not be changed by MC-DCI. Therefore, the UE may determine the length of the uplink MC-DCI by using the configuration information of the active uplink bandwidth.

According to the third method, the active uplink BWP of a cell in the dormant state may not be switched according to the MC-DCI. In addition, since the cell is a dormant cell, the UE may not transmit a UL-SCH or an SRS in the switched active uplink BWP. For example, when the UE receives MC-DCI for scheduling uplink transmission in multiple cells, the MC-DCI may include a BWP indicator field. If the switching of the active uplink BWP is indicated according to the BWP indicator field for a cell in a dormant state among multiple cells, the UE may ignore the switch indication. That is, even if another uplink BWP other than the active uplink BWP for the cell is indicated in the BWP indicator field, the UE may not switch the active uplink BWP to the indicated uplink BWP.

In a fourth method, the UE may determine the length of uplink MC-DCI by using configuration information of an uplink BWP in which the index in the cell corresponds to a specific BWP ID. Here, the specific BWP ID may be firstActiveUplinkBWP-Id. Here, a specific BWP ID may be the lowest index (index 0). Alternatively, the specific BWP ID may be a BWP ID with the lowest index (index 1) among BWP IDs that are configurable by a higher layer signal. Alternatively, a specific BWP ID here may be a value configured by a higher layer signal. Here, a specific BWP ID may be firstWithinActiveTimeBWP-Id or firstOutsideActiveTimeBWP-Id.

According to some of the methods, the active downlink BWP and the active uplink BWP may be different pairs (or may not be pairs corresponding to the same index). For example, in the second method, when the active uplink BWP is switched according to MC-DCI, the active uplink BWP may be a BWP other than the uplink BWP corresponding to the downlink dormant BWP. In a cell using a time division duplex, the active DL BWP and active UL BWP may always be limited to the same pair. That is, only the methods in which the active downlink BWP and the active uplink BWP are maintained as the same pair may be applied to a time-division duplex cell.

According to some of the methods, a downlink BWP used for determining the length of the downlink MC-DCI and an uplink BWP used for determining the length of the uplink MC-DCI may be different pairs (or may not be pairs corresponding to the same index). For example, when the cell is in a dormant state, if the length of the uplink MC-DCI is determined based on the uplink BWP having the index firstActiveUplinkBWP-Id in the fourth method and the length of the downlink MC-DCI is determined based on the downlink BWP having the index firstWithinActiveTimeBWP-Id or firstOutsideActiveTimeBWP-Id in the fourth method, the length of the uplink MC-DCI and the length of the downlink MC-DCI may be determined based on different BWP pairs. In a cell that is time-division duplex, the UE may always determine the length of uplink MC-DCI and the length of downlink MC-DCI, based on the same BWP pair. That is, when determining the length of downlink MC-DCI and when determining the length of uplink MC-DCI, the UE may use the uplink BWPs corresponding to the downlink BWP used for the determination of the length of the downlink MC-DCI.

A preferred operation of a UE according to the disclosure is given below.

For a UE configured with a set of cells scheduled by DL MC-DCI or UL MC-DCI,
- If an SCell within the set of cells is deactivated and its firstActiveDownlinkBWP-Id is not set to dormant BWP, the UE determines the size of DL MC-DCI according to the DL BWP provided by firstActiveDownlinkBWP-Id.
- If an SCell within the set of cells is dormant, or if an SCell within the set of cells is deactivated and its firstActiveDownlinkBWP-Id is set to dormant BWP,
   ○ the UE determines the size of DL MC-DCI according to the DL BWP provided by firstWithinActiveTimeBWP-Id for the SCell if provided;
   ○ otherwise, according to the DL BWP provided by firstOutsideActiveTimeBWP-Id for the SCell.
- For an SCell within the set of cells in paired spectrum,
   ○ If the SCell is deactivated, the UE determines the size of UL MC-DCI according to the UL BWP provided by firstActiveUplinkBWP-Id.
   ○ If the SCell is dormant,
      Alt 1) the UE determines the size of UL MC-DCI according to the active UL BWP provided by the reference cell for the SCell. (the reference cell is the cell used for PDCCH monitoring or BD/CCE count, etc.)
      Alt 2) the UE determines the size of UL MC-DCI according to the currently active UL BWP for the SCell. (the currently active UL BWP can be switched by DCI format scheduling PUSCH (i.e., by UL MC-DCI))
      Alt 3) the UE determines the size of UL MC-DCI according to the active UL BWP when the SCell dormancy indication is received for the SCell (the active UL BWP is not switched by DCI format scheduling PUSCH (i.e., by UL MC-DCI))
      Alt 4) the UE determines the size of UL MC-DCI according to the UL BWP provided by higher-layer signaling
      firstActiveUplinkBWP-Id, defaultDownlinkBWP-Id, Initial DL BWP ID, bwp-Id = 0 or 1 (lowest BWP ID), Dormant BWP ID, firstWithinActiveTimeBWP-Id or firstOutsideActiveTimeBWP-Id
- For an SCell within the set of cells in unpaired spectrum,
   ○ If the SCell is deactivated and the DL BWP provided by firstActiveUplinkBWP-Id is not set to dormant BWP, the UE determines the size of UL MC-DCI according to the UL BWP provided by firstActiveUplinkBWP-Id.

If the SCell is dormant or the SCell is deactivated and the DL BWP provided by firstActiveUplinkBWP-Id is set to dormant BWP,
Alt 1) the UE determines the size of UL MC-DCI according to the active UL BWP provided by the reference cell for the SCell. (the reference cell is the cell used for PDCCH monitoring or BD/CCE count, etc.)
Alt 2) the UE determines the size of UL MC-DCI according to the currently active UL BWP. (the currently active UL BWP can be switched by DCI format scheduling PUSCH for the SCell (i.e., by DL MC-DCI or UL MC-DCI)
Alt 3) the UE determines the size of UL MC-DCI according to the active UL BWP when the SCell dormancy indication is received (the active UL BWP is not switched by DCI format scheduling PUSCH for the SCell (i.e., by DL MC-DCI or UL MC-DCI)
Alt 4) the UE determines the size of UL MC-DCI according to the UL BWP provided by higher-layer signaling
firstActiveUplinkBWP-Id, defaultUplinkBWP-Id, Initial UL BWP ID, bwp-Id = 0 or 1 (lowest BWP ID), Dormant BWP ID, firstWithinActiveTimeBWP-Id or firstOutsideActiveTimeBWP-Id

The order of a preferable UE operation according to the disclosure is as follows.
- In a first operation, the UE may receive high layer configuration information from the base station. The higher layer configuration information may include multiple cells that may be scheduled by one piece of MC-DCI. The higher layer configuration information may include an index (firstActiveDownlinkBWP-1d) of a first active downlink BWP and an index (firstActiveUplinkBWP-Id) of a first active uplink BWP when the cell is switched from deactivation to activation. The higher layer configuration information may include an index of a dormant downlink BWP used when a cell is indicated to be in a dormant state, and an index (firstOutsideActiveTimeBWP-Id or firstWithinActiveTimeBWP-Id) of a downlink BWP used when returning from the dormant state to a non-dormant state. The configuration information may include a duplex mode of a cell.
- In a second operation, the UE may determine a cell that is deactivated or in a dormant state among the cells. The UE may receive an indication of cell deactivation through a MAC-CE indication, RRC configuration, or a timer expiration.
- In a third operation, the UE may determine a duplex mode of the cell in a deactivated or dormant state. The determination may be performed based on the higher layer configuration information or, alternatively, based on a band corresponding to a cell. The cell may be one of a time division duplex or a frequency division duplex.
- In a fourth operation, the UE may determine the length of MC-DCI, based on a duplex mode of the cell. A method of determining the MC-DCI length may be determined by at least one or a combination of the methods of the disclosure, with reference to Table 14 below.
- In a fifth operation, the UE may monitor and receive the MC-DCI, based on the determined length of the MC-DCI.

### Fifth Embodiment: Changed DCI monitoring time

In case that the active BWP of each cell for determining the DCI fields and the DCI contents of the MC-DCI monitored by the UE is switched, there is a need to determine a time point at which the UE should monitor the changed MC-DCI.

If one piece of DCI schedules a PDSCH for a single cell, and the DCI indicates a different BWP other than the currently active BWP, the UE may not receive other channels from the third symbol of the slot in which the DCI is received to the start time of the slot in which the PDSCH is scheduled. In addition, from the start time of the slot in which the PDSCH is scheduled, other channels, for example, the PDCCH is monitored in a PDCCH monitoring occasion (MO). In this case, the DCI transmitted through the PDCCH may be determined in length based on the RRC configuration information of a newly activated BWP. According to the above operation, the UE may complete the BWP switching operation from after the third symbol of the slot in which the DCI indicating the BWP switching is received up to within the start time of the slot in which the PDSCH is scheduled.

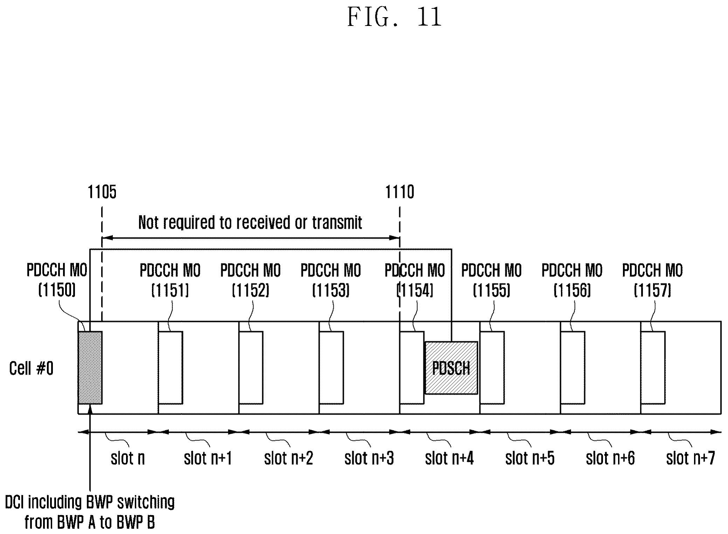

FIG. 11 illustrates an example in which one piece of DCI schedules a PDSCH for one cell, and the DCI indicates a BWP other than a currently active BWP. When the DCI received in a PDCCH MO 1150 of slot n in FIG. 11 indicates a BWP B other than BWP A currently activated, the UE may not monitor PDCCH MOs 1151, 1152, and 1153 from a time point 1105 after a third symbol of slot n to a start time point 1110 of a slot in which a PDSCH is scheduled. In addition, PDCCH MOs 1154, 1155, 1156, and 1157 may monitor DCI of a length determined based on the RRC configuration of active BWP B indicated.

In case that the UE schedules multiple PDSCHs and the MC-DCI indicates BWP switching for multiple cells, it may be ambiguous as to the time point for PDCCH monitoring, and the length of the MC-DCI when monitoring the PDCCH. This is because the MC-DCI schedules multiple PDSCHs, and thus there may be multiple reference PDSCHs.

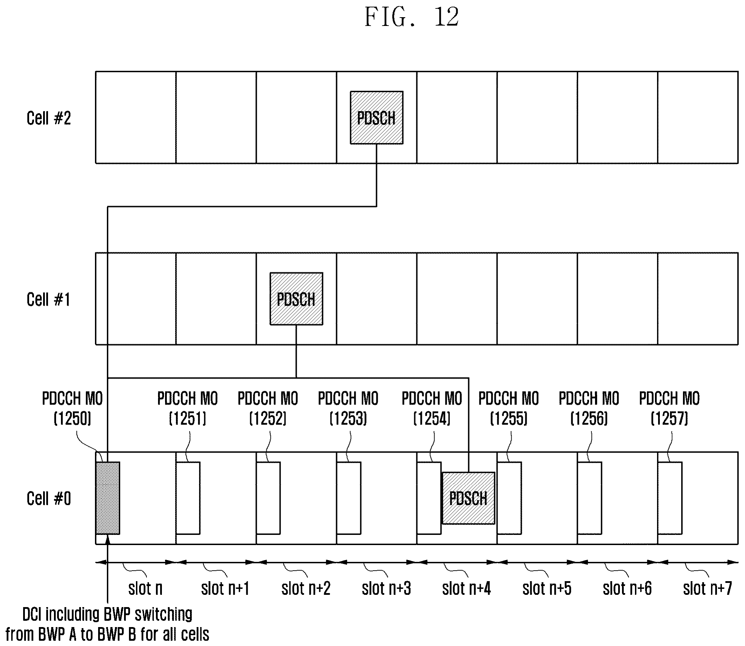

FIG. 12 illustrates an example in which DCI for scheduling multiple PDSCHs indicates BWP switching.

Referring to FIG. 12, it is assumed that PDCCH MOs 1250, 1251, 1252, 1253, 1254, 1255, 1256, and 1257 for transmitting MC-DCI are configured in cell 0. In addition, the cells that can be simultaneously scheduled by the MC-DCI are cells 0, 1, and 2. It is assumed that the UE has received the MC-DCI for switching the BWP of cell 0, cell 1, and cell 2 in the PDCCH MO 1250. In addition, the DCI may schedule a PDSCH for each of cell 0, cell 1, and cell 2. For reference, the slots in which PDSCHs are scheduled for different cells may be different. For example, a PDSCH may be scheduled in slot (n+4) in cell 0, a PDSCH may be scheduled in slot (n+2) in cell 1, and a PDSCH may be scheduled in slot (n+3) in cell 2. The scheduled PDSCHs are scheduled in the BWP indicated by the MC-DCI.

The UE determines the length of MC-DCI, based on the RRC configuration information of an active BWP. That is, the length of the MC-DCI received in the PDCCH MO 1250 may be determined, based on the RRC configuration information of the BWP, since BWP A of each cell is an active BWP. However, when the active BWP is switched by MC-DCI, BWP B of each cell is the active BWP, and thus the length of MC-DCI should be determined based on the RRC configuration information of BWP B. Since the MC-DCI schedules a PDSCH for each of the multiple cells, however, it may be ambiguous for the UE as to which PDCCH MO should be monitored for the MC-DCI having a length determined based on the RRC configuration information of BWP B.

In one method of the disclosure, the UE may select one of the multiple PDSCHs of the multiple cells scheduled by the MC-DCI as a reference, and may determine the length of DCI for MC-DCI monitoring, based on the reference PDSCH. That is, in PDCCH monitoring occasions after the start time of the slot in which the reference PDSCH is scheduled, the UE may determine the length of the MC-DCI, based on the RRC configuration information of the active BWPs switched according to the BWP switching indicated by the MC-DCI, and may monitor the MC-DCI according to the determination. The UE may not monitor a PDCCH MO and/or receive a PDCCH until the slot in which a reference PDSCH is scheduled.

The PDSCH serving as a reference among multiple scheduled PDSCHs may be determined as follows.

The reference PDSCH may be PDSCH that is scheduled earliest in time among the scheduled PDSCHs. In other words, in case that a PDSCH is scheduled for each of multiple cells through MC-DCI, a PDSCH that starts the earliest in time among the scheduled PDSCHs may be the reference PDSCH. After the start time of the slot in which the reference PDSCH is scheduled, the UE may assume that the BWP switching has been completed. That is, in a PDCCH monitoring occasion after the start time of a slot in which the reference PDSCH is scheduled, the UE may determine the length of MC-DCI, based on the switched BWP and monitor the MC-DCI. Since the PDSCH that starts earliest is selected as the reference, the UE may assume that the BWP switching has been completed at the earliest possible time. Therefore, the MC-DCI corresponding to the earliest switched BWP may be monitored.

For reference, in this example, the slot of the earliest PDSCH in time among the plurality of scheduled PDSCHs is selected as the reference PDSCH. This is technically equivalent to selecting the slot that starts earliest in time among the slots corresponding to the plurality of scheduled PDSCHs.

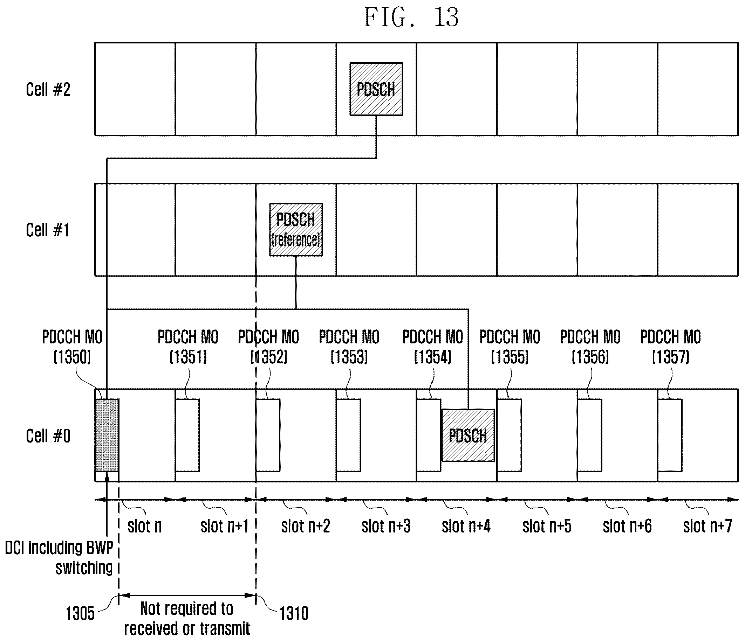

FIG. 13 illustrates an example of a method for monitoring MC-DCI, with reference to a PDSCH that starts earliest in time.

The UE may receive MC-DCI for switching BWPs of three cells in a PDCCH MO 1350 of slot n. Here, the currently active BWP in each cell is BWP A, and the newly indicated BWP to be activated is BWP B. In addition, the MC-DCI may schedule a PDSCH for each of the cells. The scheduled PDSCH may be located in newly activated BWP B. The UE may select a PDSCH that starts earliest in time among the PDSCHs as a reference. In FIG. 13, the PDSCH of cell 0 is scheduled in slot (n+4), the PDSCH of cell 1 is scheduled in slot (n+2), and the PDSCH of cell 2 is scheduled in slot (n+3). Therefore, the PDSCH of cell 1 is the PDSCH that starts earliest in time. Therefore, the reference PDSCH is a PDSCH of cell 1. The UE may not receive a PDCCH between a time point 1305 after the third symbol of slot (slot n) in which the MC-DCI indicating BWP switching is received and a start time point 1310 of the slot (slot (n+2)) in which the reference PDSCH is scheduled. That is, the UE may not monitor a PDCCH MO 1351. The UE may monitor the MC-DCI in PDCCH MOs 1352, 1353, 1354, 1355, 1356, and 1357 after the start time point 1310 of the slot (slot (n+2)) in which a reference PDSCH is scheduled, wherein the length of the MC-DCI may be determined based on the RRC configuration information of newly indicated BWP B.

Alternatively, the reference PDSCH may be a PDSCH of a cell for monitoring a PDCCH. It will be assumed that the cell for monitoring MC-DCI is cell 1. When the MC-DCI schedules a PDSCH for each of multiple cells including cell 1, the UE may determine the PDSCH of cell 1 as a reference PDSCH. That is, in a PDCCH MO after the start time of a slot in which PDSCH of cell 1 is scheduled, the UE may assume that the BWP switching has been completed. For reference, in case that a PDSCH is not scheduled for a cell for monitoring the MC-DCI, the UE may select a reference PDSCH, based on a PDSCH of another cell. In this case, the reference PDSCH may be selected according to another method described in the disclosure.

Alternatively, for example, the reference PDSCH may be a PDSCH that starts latest in time among the scheduled PDSCHs. That is, in case that PDSCHs are scheduled for respective multiple cells through the MC-DCI, the PDSCH that starts latest in time among the scheduled PDSCHs may be used as a reference. After the start time of the slot in which the reference PDSCH is scheduled, the UE may assume that the BWP switching has been completed. In other words, in a PDCCH MO after the start time of a slot in which the reference PDSCH is scheduled, the UE may determine DCI fields or DCI contents of the MC-DCI, based on the switched BWP, and may monitor the MC-DCI. Since the PDSCH that starts latest in time is selected, a sufficient time for BWP switching may be guaranteed to the UE.

Alternatively, for example, the reference PDSCH may be a PDSCH scheduled for a cell having the lowest cell index among the scheduled PDSCHs. That is, in case that PDSCHs are scheduled for respective multiple cells through the MC-DCI, the PDSCH scheduled for the cell having the lowest cell index among the scheduled PDSCHs may be used as the reference PDSCH. After the start time of the slot in which the reference PDSCH is scheduled, the UE may assume that the BWP switching has been completed. That is, in PDCCH MOs after the start time of the slot in which the reference PDSCH is scheduled, the UE may determine DCI fields or DCI contents of the MC-DCI based on the switched BWP, and may monitor the MC-DCI.

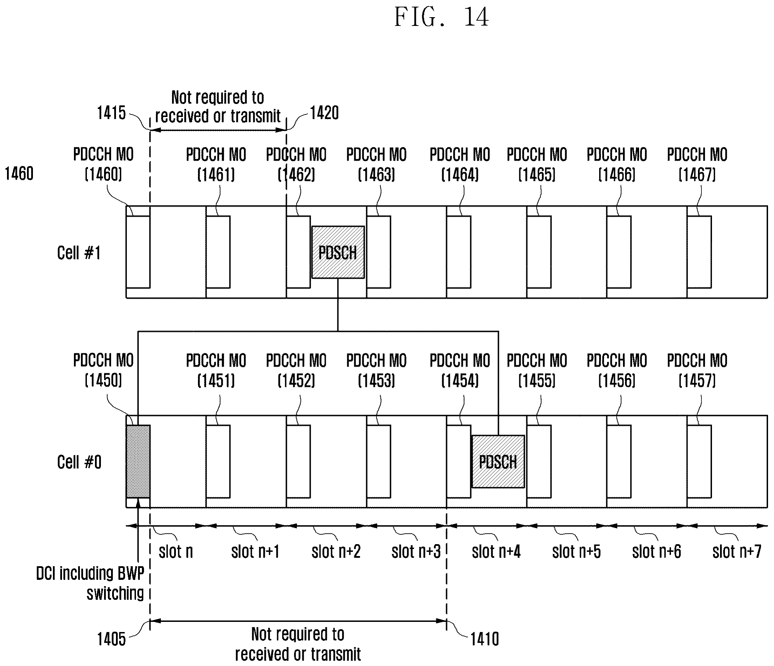

FIG. 14 illustrates an example of a method of determining multiple PDSCHs as a reference PDSCH to monitor MC-DCI.

In the above methods, one of multiple PDSCHs is determined as a reference. Another method may be used to determine the multiple PDSCHs as a reference. Referring to FIG. 14, it is assumed that the UE monitors a PDCCH in one or more cells. That is, the UE may monitor MC-DCI in PDCCH MOs 1450, 1451, 1452, 1453, 1454, 1455, 1456, and 1457 of cell 0, and may monitor other DCIs in PDCCH MOs 1460, 1461, 1462, 1463, 1464, 1465, 1466, and 1467 of cell 1. In this case, each cell monitoring its respective PDCCH may determine its respective reference PDSCH. For example, the reference PDSCH of PDCCH MO of cell 0 may be the PDSCH of cell 0, and the reference PDSCH of PDCCH MO of cell 1 may be the PDSCH of cell 1. In other words, a PDSCH scheduled for each cell for monitoring a PDCCH may be determined as a reference PDSCH. In addition, an MO not to be monitored may be determined for each cell. For example, in cell 0, the UE may not monitor the MC-DCI in the PDCCH MOs 1451, 1452, and 1453 between a time point 1405 after the third symbol of slot (slot n) in which the MC-DCI for switching the BWP is received and a start time point 1410 of slot (slot (n+4)) in which the PDSCH scheduled for cell 0 is received. Similarly, in cell 1, the UE may not monitor the DCI in the PDCCH MO 1461 between a time point 1415 corresponding to the time point after the third symbol of slot (slot n) in which the MC-DCI for switching the BWP is received and a start time point 1420 of slot (slot n+2) in which the PDSCH scheduled in cell 1 is received.

The method is a method of configuring a reference PDSCH, which is equivalent to receiving, in each cell, DCI for switching the BWP of each cell, although MC-DCI indicates that the BWPs of multiple cells are to be switched. That is, the method may be regarded as equivalent to a method of assuming that, as the time when the MC-DCI is received, DCI for switching the BWP of each cell is received at the same time, and that each DCI schedules a PDSCH for each cell, and configuring the reference PDSCH.

The UE may receive an indication of a dormancy operation applied to an SCell through DCI. The UE should switch the active BWP of the SCell to a dormant BWP at a specific time point after the time point of DCI reception through the PDCCH. In this case, if the MC-DCI length is determined with reference to the active BWP, it may be unclear whether the dormant BWP is activated. In this case, according to the second embodiment, if a cell is a dormancy SCell, the payload length of the MC-DCI may be determined based on a dormant BWP or a BWP corresponding to firstOutsideActiveTimeBWP-Id to firstWithinActiveTimeBWP-Id. However, there may be no PDSCH scheduled by DCI indicating a dormancy operation. Therefore, the method for determining a reference PDSCH proposed in the fourth embodiment above may not be applied.

Based on a reception time of DCI indicating an SCell dormancy operation, the UE may monitor a PDCCH in a PDCCH MO after a predetermined time, by assuming a payload of new MC-DCI. Here, the new MC-DCI is the MC-DCI determined according to the DCI design method (second embodiment) determined according to the SCell dormancy operation. Here, the predetermined time may be at least one of the following.

As a first example, based on the reception time of DCI, in the PDCCH MO of the slot starting after 3 ms (in case of a 15 kHz subcarrier spacing, 3 slots, in case of a 30 kHz subcarrier spacing, 3*2 slots, in case of a 60 kHz subcarrier spacing, 3*4 slots, in case of a 120 kHz subcarrier spacing, 3*8 slots, in case of a 480 kHz subcarrier spacing, 3*32 slots, and in case of a 960 kHz subcarrier spacing, 3*64 slots), the UE may assume a new MC-DCI payload. The reception time of DCI may be the last symbol in which the PDCCH in which the DCI is received is located. Alternatively, the reception time of DCI may be the last symbol of the slot in which the DCI is received.

As a second example, based on the reception time of DCI, the UE may assume the payload of new MC-DCI in a PDCCH MO that starts X symbols later. Here, the reception time of the DCI may be a last symbol in which a PDCCH through which the DCI is received is received. Alternatively, the reception time of the DCI may be the last symbol of the slot in which the DCI is received.

The X symbol may be one of the following.
- X symbol may be a value corresponding to a PDSCH processing time. When the UE receives an indication of PDSCH processing capability 1, X may be 8 (15kHz subcarrier), 10 (30kHz subcarrier), 17 (60kHz subcarrier), 20 (120kHz subcarrier), 80 (480kHz subcarrier), or 160 (960kHz subcarrier) symbols. When the UE receives an indication of PDSCH processing capability 2, X may be 3 (15kHz subcarrier), 4.5 (30kHz subcarrier), or 9 (60kHz subcarrier) symbols.
- X symbol may correspond to a value corresponding to a PUSCH processing time. When the UE receives an indication of PUSCH processing capability 1 (PUSCH timing capability 1), X may be 10 (15kHz subcarrier), 12 (30kHz subcarrier), 23 (60kHz subcarrier), 36 (120kHz subcarrier), 144 (480kHz subcarrier), or 288 (960kHz subcarrier) symbols. When the UE receives an indication of PUSCH processing capability 2 (PUSCH timing capability 2), X may be 5 (15kHz subcarrier), 5.5 (30kHz subcarrier), or 11 (60kHz subcarrier) symbols.
- X symbol may be as follows. X may be 13 (15kHz subcarrier), 13 (30kHz subcarrier), 20 (60kHz subcarrier), 24 (120kHz subcarrier), 96 (480kHz subcarrier), or 192 (960kHz subcarrier) symbols.

**[Table 14]**

| µ | NR slot length (ms) | Interruption length X (slot) |
|---|---|---|
| 0 | 1 | 1 |
| 1 | 0.5 | 1 |
| 2 | 0.25 | 3 |
| 3 | 0.125 | 5 |
| 5 | 0.03125 | 17 |
| 6 | 0.015625 | 33 |

Table 14 shows an interruption length for BWP switching. When the UE is indicated of SCell dormancy operation, the UE does not actually perform BWP switching, but may apply the interruption length for BWP switching by assuming that the BWP switching has occurred. As another method, the UE may transmit HARQ-ACK of DCI indicating the SCell dormancy to the base station. In this case, the time point at which the DCI is received may be interpreted as the time point at which the HARQ-ACK corresponding to the DCI is transmitted, in the above examples. That is, a reception time of DCI may be the last symbol in which a PUCCH for transmitting a HARQ-ACK corresponding to the DCI is located. Alternatively, the reception time of the DCI may be the last symbol of a slot in which a HARQ-ACK corresponding to the DCI is transmitted.

The UE may receive an indication of a deactivation or activation operation of one cell through a PDSCH including a MAC-CE. The UE should deactivate or activate the one cell at a specific time point after the reception time of the PDSCH including the MAC-CE. In this case, if the length of the MC-DCI is determined based on the active BWP, it may be unclear when a cell is deactivated or activated. In this case, according to the first embodiment, if a cell is in the deactivated state, the payload length of MC-DCI may be determined based on a single BWP (firstActiveDownlinkBWP-Id, firstActiveUplinkBWP-Id, defaultDownlinkBWP-Id, defaultUplinkBWP-Id, initial DL BWP, initial UL BWP, etc.). In addition, in case that the cell is in the active state, the payload length of MC-DCI may be determined, based on the active BWP of the cell. In this case, while the PDSCH including the MAC-CE may exist, since the decoding time of the PDSCH is unclear, it is necessary to determine when the cell was deactivated or activated.

Based on a reception time of a PDSCH including a MAC-CE indicating deactivation or activation of a cell, the UE may monitor a PDCCH in a PDCCH MO after a predetermined time by assuming a payload of new MC-DCI. That is, it may be assumed that the cell is deactivated or activated according to the PDSCH after a specific time after a symbol in which the PDSCH is received or after a slot in which the PDSCH is received.

Based on a transmission time of a HARQ-ACK corresponding to a PDSCH including a MAC-CE indicating deactivation or activation of a cell, the UE may monitor a PDCCH in a PDCCH MO after a predetermined time by assuming a payload of new MC-DCI. That is, it may be assumed that the cell has been deactivated or activated according to the PDSCH after a specific time after the symbol in which the PUCCH including the HARQ-ACK is transmitted or after the slot in which the HARQ-ACK is transmitted.

The specific time may be determined based on one of the foregoing examples used in the SCell dormancy.

The method described above has mainly been described with regard to the MC-DCI that schedules a PDSCH, but the disclosure may be applied to the MC-DCI that schedules a PUSCH.

At least one of the first embodiment to the fifth embodiment may be used in combination.

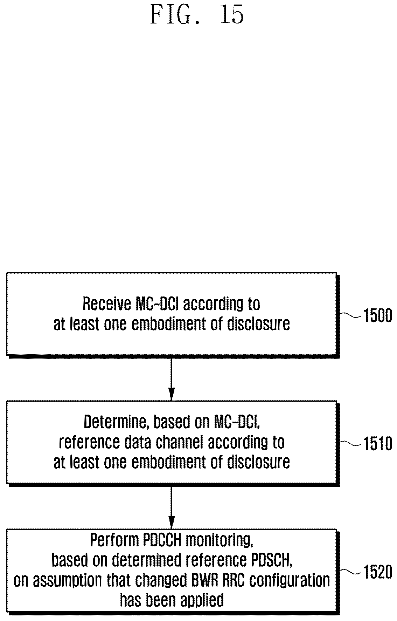

FIG. 15 illustrates an example of an operation of a UE according to the disclosure.

According to FIG. 15, in operation 1500, the UE may receive MC-DCI from a base station. In this case, the length of MC-DCI for reception by the UE and/or the content and length of the DCI field may be assumed according to the method described in the disclosure. The MC-DCI may schedule a data channel for each of multiple cells, and may also include information indicating BWP switching for at least one of the multiple cells.

In operation 1510, when the MC-DCI includes information indicating BWP switching for at least one cell, the UE determines a reference data channel according to the method for determining a reference data channel described in the disclosure. In addition, although not illustrated, the UE transmits and receives a data channel scheduled for each of multiple cells by the MC-DCI. In operation 1520, the UE may monitor a PDCCH MO from a slot in which the determined reference data channel is scheduled, and in this case, the UE may monitor the PDCCH MO and receive DCI by assuming that the RRC configuration for the switched BWP has been applied to DCI generation. In addition, the UE may not perform signal transmission and reception to and from the base station from the third symbol of the slot in which the MC-DCI is received to the start time of the slot in which the reference data channel is scheduled.

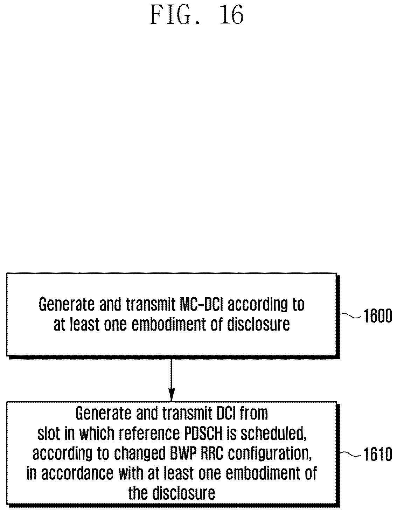

FIG. 16 illustrates an example of a base station operation according to the disclosure.

According to FIG. 16, in operation 1600, the base station transmits MC-DCI for scheduling a data channel for each of multiple cells. In this case, the MC-DCI may be configured according to the method described in the disclosure. For example, the base station may generate the MC-DCI according to an RRC configuration for a BWP of cells that the MC-DCI is able to schedule, and if a specific cell is deactivated or a dormant BWP is configured, the base station may determine the length of a specific field (e.g., an FDRA field) included in the MC-DCI and/or the length of the MC-DCI, according to at least one combination of the embodiments described in the disclosure. In this case, the base station may also add a padding bit to adjust the length of the MC-DCI to a predetermined length. In addition, the MC-DCI may include information for indicating BWP switching for at least one of the multiple cells.

In operation 1610, in case that the MC-DCI includes information indicating BWP switching for at least one cell among multiple cells, the base station performs signal transmission and reception to and from the UE according to the method for determining a reference data channel described in the disclosure. The base station may transmit DCI from the start time of a slot in which a reference data channel is scheduled, and in this case, the DCI is generated and transmitted by the base station according to RRC configuration for the switched BWP (indicated by MC-DCI). In addition, although not illustrated, the base station transmits and receives a plurality of data channels respectively scheduled for the multiple cells by the MC-DCI. In addition, the base station may not perform signal transmission and reception to and from the UE from the third symbol of the slot in which the MC-DCI is transmitted to the start time of the slot in which the reference data channel is scheduled.

The above-described flowchart illustrates an exemplary method that may be implemented according to the principle of the disclosure, and various changes may be made to the method shown in the flowchart herein. For example, although shown as a series of operations, various operations in each figure may overlap, occur in parallel, occur in a different order, or occur multiple times. In another example, the operations may be omitted or replaced by other operations.

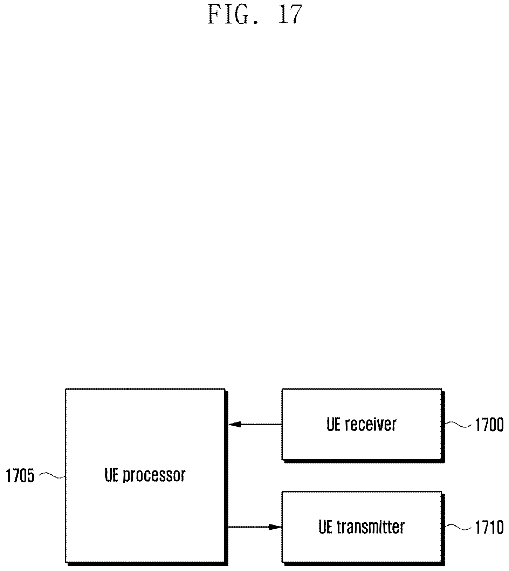

FIG. 17 illustrates a structure of a UE in a wireless communication system according to an embodiment of the disclosure.

Referring to FIG. 17, the UE may include a transceiver, which refers to a UE receiver 1700 and a UE transmitter 1710 as a whole, a memory (not illustrated), and a UE processor 1705 (or UE controller or processor). The UE transceiver 1700 and 1710, the memory, and the UE processor 1705 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. The processor may include multiple processors, and the processor may perform the operation of controlling the components of the UE by executing programs stored in the memory.

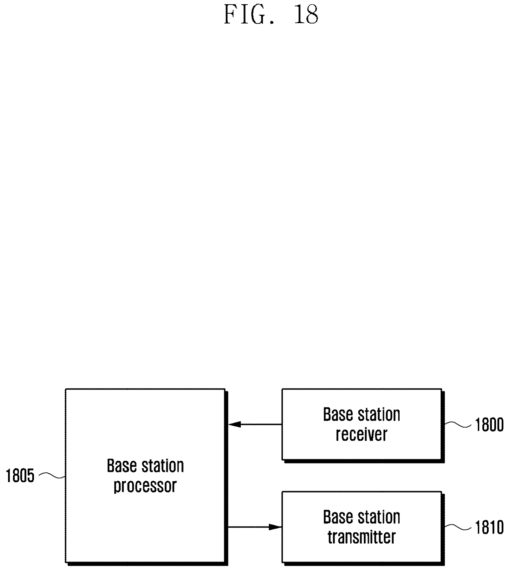

FIG. 18 illustrates a structure of a base station in a wireless communication system according to an embodiment of the disclosure.

Referring to FIG. 18, the base station may include a transceiver, which refers to a base station receiver 1800 and a base station transmitter 1810 as a whole, a memory (not illustrated), and a base station processor 1805 (or base station controller or processor). The base station transceiver 1800 and 1810, the memory, and the base station processor 1805 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal in a communication system, the method comprising:
receiving, from a base station, information on a cell set scheduled by downlink control information for a plurality of cells, and
receiving, from the base station, the downlink control information for the plurality of cells,
wherein the downlink control information includes resource allocation information for scheduling each physical downlink shared channel (PDSCH) on one or more cells included in the cell set, and
wherein, in case that a first cell among the one or more cells is a deactivated cell, a length of the resource allocation information for the first cell is based on a downlink bandwidth part (BWP) that is first activated in case of activating the first cell.

2. The method of claim 1, wherein the first activated downlink BWP is not a dormant BWP.

3. The method of claim 1, wherein, in case that an activated BWP of a second cell among the one or more cells is a dormant BWP, a length of resource allocation information for the second cell is based on a BWP that is activated in case of releasing a dormant operation of the second cell.

4. The method of claim 3, wherein the activated BWP is a BWP that is activated in case that an indication of activation of the second cell is received within an active time or a BWP that is activated in case that the indication of activation of the second cell is received outside the active time.

5. A method performed by a base station in a communication system, the method comprising:
transmitting, to a terminal, information on a cell set scheduled by downlink control information for a plurality of cells; and
transmitting, to the terminal, the downlink control information for the plurality of cells,
wherein the downlink control information includes resource allocation information for scheduling each physical downlink shared channel (PDSCH) on one or more cells included in the cell set, and
wherein, in case that a first cell among the one or more cells is a deactivated cell, a length of the resource allocation information for the first cell is based on a downlink bandwidth part (BWP) that is first activated in case of activating the first cell.

6. The method of claim 5, wherein the first activated downlink BWP is not a dormant BWP.

7. The method of claim 5, wherein, in case that an activated BWP of a second cell among the one or more cells is a dormant BWP, a length of resource allocation information for the second cell is based on a BWP that is activated in case of releasing a dormant operation of the second cell.

8. The method of claim 7, wherein the activated BWP is a BWP that is activated in case that an indication of activation of the second cell is received within an active time or a BWP that is activated in case that the indication of activation of the second cell is received outside the active time.

9. A terminal in a communication system, the terminal comprising:
multiple transceivers; and
a controller including multiple processors,
wherein the controller is configured to:
receive, from a base station, information on a cell set scheduled by downlink control information for a plurality of cells; and
receive, from the base station, the downlink control information for the plurality of cells,
wherein the downlink control information includes resource allocation information for scheduling each physical downlink shared channel (PDSCH) on one or more cells included in the cell set, and
wherein, in case that a first cell among the one or more cells is a deactivated cell, a length of the resource allocation information for the first cell is based on a downlink bandwidth part (BWP) that is first activated in case of activating the first cell.

10. The terminal of claim 9, wherein the first activated downlink BWP is not a dormant BWP.

11. The terminal of claim 9, wherein, in case that an activated BWP of a second cell among the one or more cells is a dormant BWP, a length of resource allocation information for the second cell is based on a BWP that is activated in case of releasing a dormant operation of the second cell.

12. The terminal of claim 11, wherein the activated BWP is a BWP that is activated in case that an indication of activation of the second cell is received within an active time or a BWP that is activated in case that the indication of activation of the second cell is received outside the active time.

13. A base station in a communication system, the base station comprising:
multiple transceivers; and
a controller including multiple processors,
wherein the controller is configured to:
transmit, to a terminal, information on a cell set scheduled by downlink control information for a plurality of cells; and
transmit, to the terminal, the downlink control information for the plurality of cells,
wherein the downlink control information includes resource allocation information for scheduling each physical downlink shared channel (PDSCH) on one or more cells included in the cell set, and
wherein, in case that a first cell among the one or more cells is a deactivated cell, a length of the resource allocation information for the first cell is based on a downlink bandwidth part (BWP) that is first activated in case of activating the first cell.

14. The base station of claim 13, wherein, in case that an activated BWP of a second cell among the one or more cells is a dormant BWP, a length of resource allocation information for the second cell is based on a BWP that is activated in case of releasing a dormant operation of the second cell.

15. The base station of claim 14, wherein the activated BWP is a BWP that is activated in case that an indication of activation of the second cell is received within an active time or a BWP that is activated in case that the indication of activation of the second cell is received outside the active time.
